# EUROPEAN PATENT APPLICATION

(11) **EP 4 682 361 A1**
(43) Date of publication of application: **21.01.2026**
(21) Application number: 25188557.0
(22) Date of filing: 09.07.2025
(51) Int. Cl.: F02C 3/22, F02C 7/08, F02C 7/14, F02C 7/224

(54) **FUEL THEREMAL MANAGEMENT SYSTEM FOR A GAS TURBINE ENGINE**

(30) Priority: 18.07.2024 US 202418777356
(71) Applicant: General Electric Company, Cincinnati, Ohio 45215 (US); GE Avio S.r.l., 10040 Rivalta di Torino (TO) (IT)
(72) Inventor: SHEINBERG, Dustin, Lynn, 01910 (US); GERNONE, Mirko, 70126 Bari (IT); KROGER, Christopher, Evendale, 45241 (US); RAMBO, Jeffrey, Evendale, 45215 (US); NIERGARTH, Daniel, Evendale, 45241 (US); GRAZIANO, Kevin, Evendale, 45215 (US)
(74) Representative: Openshaw & Co.

(57) **Abstract**

Fuel thermal management systems and related methods are disclosed. An example system (200, 500, 600) includes a flowline (204, 502, 602), a fuel tank (202) coupled to a first end of the flowline, a combustor (118) coupled to a second end of the flowline, a trim heat exchanger (212) coupled to a first portion (207) of the flowline, the fuel to absorb first heat in the trim heat exchanger as the fuel flows through the first portion of the flowline, a valve (222) coupled to the flowline to control a flow rate of the fuel in the first portion of the flowline, and a waste heat recovery heat exchanger (210) coupled to a second portion (205) of the flowline, the fuel to absorb second heat in the waste heat recovery heat exchanger, wherein a portion of at least one of the first heat or the second heat is absorbable from the fuel after the fuel exits the waste heat recovery heat exchanger.

## Description

### FIELD OF THE DISCLOSURE

This disclosure relates generally to aircraft engine fuel systems and, more particularly, to fuel thermal management systems and related methods.

### BACKGROUND

A conventional commercial aircraft generally includes a fuselage, a pair of wings, and a propulsion system that provides thrust. The propulsion system typically includes one or more aircraft engines, such as turbofan jet engines. The aircraft engine(s) may be typically mounted to a respective one of the wings of the aircraft, such as in a suspended position beneath the wing.

The aircraft further includes a fuel delivery assembly that generally includes a fuel storage tank (e.g., a storage tank, a fuel tank) and one or more fuel lines that extend between the fuel tank and the aircraft engine(s). Traditional aircraft engines are powered by aviation turbine fuel, which is typically a combustible hydrocarbon liquid fuel, such as a Kerosene-type fuel, having a desired carbon number. The aviation turbine fuel is a relatively power-dense fuel that is relatively easy to transport and stays in a liquid phase through most ambient operating conditions for aircraft.

In recent years, gas turbine engines have utilized mixtures of hydrogen gas and conventional fuels because of the advantages hydrogen gas provides. Specifically, hydrogen is an abundantly available element that has beneficial properties for combustion in gas turbine engines, such as reduced carbon emissions, lower fuel consumption (pounds per hour (pph)), greater energy production, light weight, and high combustion rate and temperature. During combustion of the mixture of hydrogen gas and conventional fuels, chemical energy and thermal energy are converted into mechanical energy. The mechanical energy produced as a result of the combustion can drive downstream turbine blades and provide propulsion to an aircraft or drive a shaft of a generator that produces electric current.

Thus, hydrogen is an abundant fuel source that has additional beneficial properties for combustion in gas turbine engines, such as a high combustion rate and temperature, which can increase an efficiency of the gas turbine engine. Gas turbine engines produce power and/or mechanical drive for aeronautics, marine applications, gear boxes, offshore power generators, terrestrial power plants, etc. Gas turbine engines can utilize hydrogen gas in addition to other conventional fuels to convert thermal and chemical energy to mechanical energy via combustion. Specifically, a gas turbine engine that utilizes hydrogen gas during combustion can incrementally increase a quantity of energy produced compared to a conventional gas turbine engine that does not utilize hydrogen gas. Further, utilizing hydrogen gas within gas turbine engines reduces harmful carbon emissions, which is a focus of power producers given the emission regulations that have been implemented by legislation.

### BRIEF DESCRIPTION OF THE DRAWINGS

FIG. 1 is a schematic cross-sectional view of an example engine for an aircraft.
FIG. 2 is a schematic representation of a fuel thermal control system associated with the engine of FIG. 1.
FIG. 3 is a schematic representation of a layout of heat exchangers in an example turbofan engine that can be utilized in the fuel thermal control systems disclosed herein.
FIG. 4 is a schematic representation of a layout of heat exchangers in an example turboprop engine that can be utilized in the fuel thermal control systems disclosed herein.
FIG. 5A is a schematic representation of another fuel thermal control system associated with the engine of FIG. 1.
FIG. 5B is a schematic representation of another fuel thermal control system associated with the engine of FIG. 1.
FIG. 6 is a schematic representation of another fuel thermal control system associated with the engine of FIG. 1.
FIG. 7 is a schematic representation of another fuel thermal control system associated with the engine of FIG. 1.
FIG. 8 is a schematic representation of another fuel thermal control system associated with the engine of FIG. 1.
FIG. 9 is a schematic representation of another fuel thermal control system associated with the engine of FIG. 1.
FIG. 10 is a schematic representation of another fuel thermal control system associated with the engine of FIG. 1.
FIG. 11 is a schematic representation of another fuel thermal control system associated with the engine of FIG. 1.
FIG. 12 is a schematic representation of another fuel thermal control system associated with the engine of FIG. 1.
FIG. 13 is a schematic representation of another fuel thermal control system associated with the engine of FIG. 1.
FIG. 14 is a schematic representation of another fuel thermal control system associated with the engine of FIG. 1.
FIG. 15 is a schematic representation of another fuel thermal control system associated with the engine of FIG. 1.
FIG. 16 is a schematic representation of another fuel thermal control system associated with the engine of FIG. 1.
FIG. 17 is a schematic representation of another fuel thermal control system associated with the engine of FIG. 1.
FIG. 18 is a schematic representation of another fuel thermal control system associated with the engine of FIG. 1.
FIG. 19 is a control logic flow diagram that fuel temperature control circuitry of FIGS. 2 and 5-18 utilizes to control fuel temperature during operations of the engine of FIG. 1.
FIG. 20 is a control logic flow diagram that fuel temperature control circuitry of FIGS. 2 and 5-18 utilizes to control fuel temperature during operations of the engine of FIG. 1.
FIG. 21 is a flowchart representative of example machine readable instructions and/or example operations that may be executed, instantiated, and/or performed by example programmable circuitry to implement fuel temperature control circuitry of FIGS. 2 and 5-18.
FIG. 22 is a block diagram of an example processing platform including programmable circuitry structured to execute, instantiate, and/or perform the example machine readable instructions and/or perform the example operations of FIGS. 21 to implement the fuel temperature control circuitry of FIGS. 2 and 5-18.

In general, the same reference numbers will be used throughout the drawing(s) and accompanying written description to refer to the same or like parts. The figures are not necessarily to scale.

### DETAILED DESCRIPTION

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a turbine engine or vehicle, and refer to the normal operational attitude of the turbine engine or vehicle. For example, with regard to a turbine engine, forward refers to a position closer to an engine inlet and aft refers to a position closer to an engine nozzle or exhaust.

As used herein, the terms "low," "mid" (or "mid-level"), and "high," or their respective comparative degrees (e.g., "lower" and "higher," when applicable), when used with compressor, turbine, shaft, fan, or turbine engine components, each refers to relative pressures, relative speeds, relative temperatures, and/or relative power outputs within an engine unless otherwise specified. For example, a "low power" setting defines the engine configured to operate at a power output lower than a "high power" setting of the engine, and a "mid-level power" setting defines the engine configured to operate at a power output higher than a "low power" setting and lower than a "high power" setting. The terms "low," "mid" (or "mid-level") or "high" in such terms may additionally, or alternatively, be understood as relative to minimum allowable speeds, pressures, or temperatures, or minimum or maximum allowable speeds, pressures, or temperatures relative to normal, desired, steady state, etc., operation of the engine.

As used herein, the terms "form" and "state" are used interchangeably to refer to the phase of a fluid. As used herein, a "flowline" can refer to a path (e.g., a flow path, flow direction, etc.) of a fluid and/or one or more structures (e.g., pipe, conduit, casing, etc.) used to enclose (e.g., direct, guide, convey, etc.) the fluid to define the path.

Hydrogen is an abundant fuel source that has additional beneficial properties for combustion in gas turbine engines, such as a high combustion rate and temperature, which can increase an efficiency of the gas turbine engine. Gas turbine engines produce power and/or mechanical drive for aeronautics, marine applications, gear boxes, offshore power generators, terrestrial power plants, etc. Gas turbine engines can utilize hydrogen gas in addition to other conventional fuels to convert thermal and chemical energy to mechanical energy via combustion. Specifically, a gas turbine engine that utilizes hydrogen gas during combustion can incrementally increase a quantity of energy produced compared to a conventional gas turbine engine that does not utilize hydrogen gas. Further, utilizing hydrogen gas within gas turbine engines reduces harmful carbon emissions, which is a focus of power producers given the emission regulations that have been implemented by legislation.

However, utilizing hydrogen as fuel presents unique challenges compared to the utilization of conventional hydrocarbons. Specifically, gaseous hydrogen can be difficult to store in a quantity that is great enough to fuel a flight. Further, to produce hydrogen combustion in a stable manner, a temperature of the hydrogen needs to be within a relatively narrow range when injected into the combustor. As such, liquid hydrogen fuel requires complex pressuring and heating to convert the hydrogen to the gaseous phase and to a temperature and pressure that will enable the hydrogen fuel to combust in a stable manner. When exhaust gases are utilized to heat liquid hydrogen for combustion (e.g., in a waste heat recovery heat exchanger), heat received by the liquid hydrogen is dependent on engine operations that produce the exhaust gases. However, transient operations (e.g., rapidly increasing or decreasing an engine output), such as a burst or chop, necessitate rapid changes in the fuel flow. As such, a size of the waste heat recovery heat exchanger must be large enough to enable the increased volume of fuel to be injected into the combustor for a burst to receive sufficient thermal energy in substantially real time. Thus, the size of the waste heat recovery heat exchanger is often larger than would be necessary for a majority of the engine operations. In addition to adding weight, which reduces an efficiency of the engine, the waste heat recovery heat exchanger is often positioned within a portion of the flow path such that increasing the size of the waste heat recovery heat exchanger reduces a cross-sectional through which exhaust gases can flow to produce thrust. As a result, the larger waste heat recovery heat exchanger results in more fuel being needed to produce a desired thrust. Additionally, the waste heat recovery heat exchanger can overheat the hydrogen fuel during certain operations (e.g., as a result of the size of the waste heat recovery heat exchanger during steady-state or low output operations), which cannot be easily remedied.

Example fuel thermal management systems and related methods are disclosed herein to control a temperature of a fuel (e.g., hydrogen, liquid natural gas, ammonia, kerosene) being delivered to a combustor with more precision. As such, the thermal management systems provide finer control of a temperature of the fuel for transient operations and protects against overheating of the fuel and/or an intermediate heat exchange fluid. Additionally, the thermal management systems disclosed herein enable a smaller waste heat recovery heat exchanger to be utilized, which increases an efficiency of the engine and provides more flexibility in the mounting and/or integration of the waste heat recovery heat exchanger.

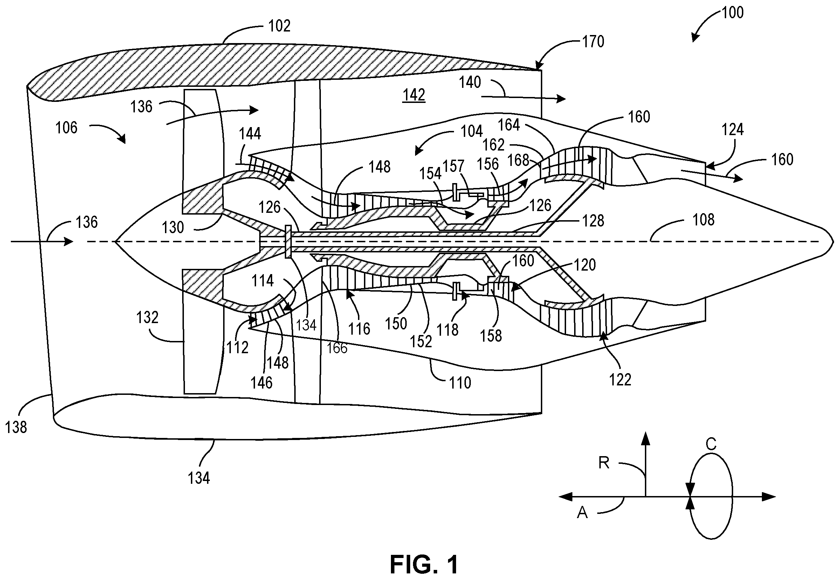

FIG. 1 is a schematic cross-sectional view of an example gas turbine engine 100 that can be utilized with example fuel systems disclosed herein. The example gas turbine engine 100 can be implemented on an aircraft and therefore referred to as an aircraft engine. In this example, the gas turbine engine 100 is a turbofan-type of engine. However, the principles of the present disclosure are also applicable to other types of engines, such as turboprop engines and engines without a nacelle, such as unducted fan (UDF) engines (sometimes referred to as propfans). Further, the examples disclosed herein can be implemented on other types of gas turbines, such as non-aircraft engines and/or power generators.

As shown in FIG. 1, the gas turbine engine 100 includes an outer bypass duct 102 (which may also be referred to as a nacelle, fan duct, or outer casing), a core turbine engine 104, and a fan section 106. The core turbine engine 104 and the fan section 106 are disposed at least partially in the outer bypass duct 102. The core turbine engine 104 is disposed downstream from the fan section 106 and drives the fan section 106 to produce forward thrust.

As shown in FIG. 1, the gas turbine engine 100 defines a longitudinal or axial centerline axis 108 extending therethrough for reference. FIG. 1 also includes an annotated directional diagram with reference to an axial direction A, a radial direction R, and a circumferential direction C. In general, as used herein, the axial direction A is a direction that extends generally parallel to the centerline axis 108, the radial direction R is a direction that extends orthogonally outward from or inward toward the centerline axis 108, and the circumferential direction C is a direction that extends concentrically around the centerline axis 108. Further, as used herein, the term "forward" refers to a direction along the centerline axis 108 in the direction of movement of the gas turbine engine 100, such as to the left in FIG. 1, while the term "rearward" refers to a direction along the centerline axis 108 in the opposite direction, such as to the right in FIG. 1.

The core turbine engine 104 includes an outer casing 110 (which may also be referred to as a mid-casing), which is substantially tubular and defines an annular inlet 112. The outer casing 110 of the core turbine engine 104 can be formed from a single casing or multiple casings. The outer casing 110 encloses, in serial flow relationship, a compressor section having a booster or low pressure compressor 114 ("LP compressor 114") and a high pressure compressor 116 ("HP compressor 116"), a combustor 118 (e.g., a combustion section), a turbine section having a high pressure turbine 120 ("HP turbine 120") and a low pressure turbine 122 ("LP turbine 122"), and an exhaust section 124.

The core turbine engine 104 includes a high pressure shaft 126 ("HP shaft 126") that drivingly couples the HP turbine 120 and the HP compressor 116. The core turbine engine 104 also includes a low pressure shaft 128 ("LP shaft 128") that drivingly couples the LP turbine 122 and the LP compressor 114. The LP shaft 128 also couples to a fan shaft 130.

The fan section 106 includes a plurality of fan blades 132 that are coupled to and extend radially outward from the fan shaft 130. In some examples, the LP shaft 128 may couple directly to the fan shaft 130 (i.e., a direct-drive configuration). In alternative configurations, the LP shaft 128 may couple to the fan shaft 130 via a reduction gear 134 (i.e., an indirect-drive or geared-drive configuration). While in this example the core turbine engine 104 includes two compressor and two turbines, in other examples, the core turbine engine 104 may only include one compressor and one turbine. Further, in other examples, the core turbine engine 104 can include more than two compressors and turbines. In such examples, the core turbine engine 104 may include more than two drive shafts or spools.

As illustrated in FIG. 1, during operation of the gas turbine engine 100, air 136 enters an inlet portion 138 of the gas turbine engine 100. The air 136 is accelerated by the fan blades 132. A first portion 140 of the air 136 flows into a bypass airflow passage 142, while a second portion 144 of the air 136 flows into the inlet 112 of the core turbine engine 104 (and, thus, into the LP compressor 114). Downstream of the inlet 112, one or more sequential stages of LP compressor stator vanes 146 and LP compressor rotor blades 148 coupled to the LP shaft 128 progressively compress the second portion 144 of the air 136 flowing through the LP compressor 114 en route to the HP compressor 116. Next, one or more sequential stages of HP compressor stator vanes 150 and HP compressor rotor blades 152 coupled to the HP shaft 126 further compress the second portion 144 of the air 136 flowing through the HP compressor 116. This provides compressed air 154 to the combustor 118 where it mixes with fuel and burns to provide combustion gases 156. Fuel is injected into the combustor 118 by one or more nozzles 157. The gas turbine engine 100 includes a compressor frame 166 to support a forward portion of the core turbine engine 104.

The gas turbine engine 100 includes a fuel system to provide heated and pressurized fuel through the nozzles 157 to the combustor 118 of the core turbine engine 104. Specifically, fuel associated with the gas turbine engine 100 of FIG. 1 can be hydrogen, liquid natural gas, ammonia, and/or kerosene that is stored (e.g., in a component of an aircraft associated with the gas turbine engine 100) at a relatively cold temperature (e.g., colder than a temperature at which the fuel is able to ignite in the presence of an ignition source, such as a spark, flame, and/or hot surface in the combustor 118). For example, hydrogen fuel can be stored in a liquid state (e.g., a liquid phase) to enable a size of an associated storage tank to be reduced and/or to prevent the hydrogen fuel from overheating during an operation of the gas turbine engine 100. Example fuel systems that adjust a temperature of the fuel between the storage tank and the nozzles 157 to prepare the fuel for combustion are disclosed in further detail herein.

The combustion gases 156 flow through the HP turbine 120 where one or more sequential stages of HP turbine stator vanes 158 and HP turbine rotor blades 160 coupled to the HP shaft 126 extract a first portion of kinetic and/or thermal energy. This energy extraction supports operation of the HP compressor 116. The combustion gases 156 then flow through the LP turbine 122 where one or more sequential stages of LP turbine stator vanes 162 and LP turbine rotor blades 164 coupled to the LP shaft 128 extract a second portion of thermal and/or kinetic energy therefrom. This energy extraction causes the LP shaft 128 to rotate, which supports operation of the LP compressor 114 and/or rotation of the fan shaft 130. The combustion gases 156 then exit the core turbine engine 104 through the exhaust section 124 thereof. The combustion gases 156 mix with the first portion 140 of the air 136 from the bypass airflow passage 142. The combined gases exit an exhaust nozzle 170 (e.g., a converging/diverging nozzle) of the bypass airflow passage 142 to produce propulsive thrust. The gas turbine engine 100 includes a turbine frame 168 to support an aft portion of the core turbine engine 104. In some examples, the turbine frame 168 is positioned downstream of the LP turbine 122.

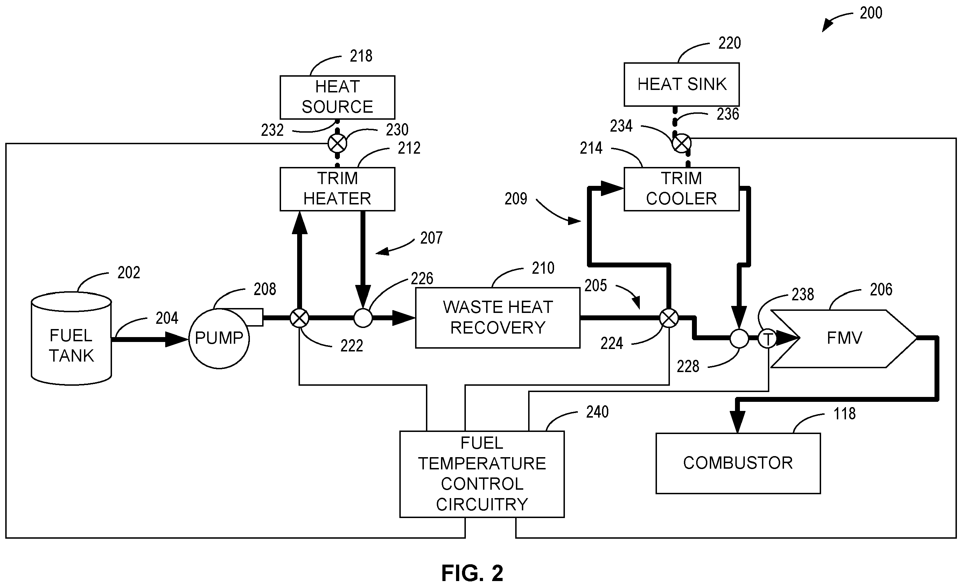

FIG. 2 illustrates a first example fuel thermal control system 200 including a fuel storage tank 202 (e.g., a liquid hydrogen fuel tank, a liquid natural gas fuel tank, an ammonia fuel tank, a kerosene fuel tank, etc.), the combustor 118, and a fuel flowline 204 to carry fuel (e.g., hydrogen, liquid natural gas, ammonia, kerosene, etc.) from the fuel storage tank 202 to the combustor 118. The fuel thermal control system 200 also includes one or more fuel metering valves 206 to regulate a flow rate of the fuel into the combustor 118. The fuel thermal control system 200 includes a fuel pump 208 to drive the fuel through the fuel flowline 204 from the fuel storage tank 202 to the combustor 118.

In the illustrated example of FIG. 2, the fuel thermal control system 200 includes a waste heat recovery heat exchanger 210, a first trim heat exchanger 212 (e.g., a trim heater, a trim heat source heat exchanger), and a second trim heat exchanger 214 (e.g., a trim cooler, a trim heat sink heat exchanger) operatively coupled to the fuel flowline 204 to adjust a temperature of the fuel. Specifically, the fuel flowline 204 includes a trunk section 205 that extends from the fuel storage tank 202 to the fuel metering valves 206 and/or the combustor 118. The trunk section 205 of the flowline intersects and/or includes the waste heat recovery heat exchanger 210. The fuel flowline 204 includes a first branch section 207 that couples the first trim heat exchanger 212 to the trunk section 205. The fuel flowline 204 also includes a second branch section 209 that couples the second trim heat exchanger 214 to the trunk section 205. The first branch section 207 and the first trim heat exchanger 212 are positioned upstream of the waste heat recovery heat exchanger 210 (e.g., between the waste heat recovery heat exchanger 210 and the fuel storage tank 202) in the fuel flowline 204. The second branch section 209 and the second trim heat exchanger 214 are positioned downstream of the waste heat recovery heat exchanger 210 (e.g., between the waste heat recovery heat exchanger 210 and the combustor 118) in the fuel flowline 204.

The fuel can receive thermal energy (e.g., heat) in the first trim heat exchanger 212 and the waste heat recovery heat exchanger 210. For example, the fuel can absorb first heat in the first trim heat exchanger 212, and the fuel can absorb second heat in the waste heat recovery heat exchanger 210. The fuel can dissipate (e.g., transfer) a portion of the first heat and/or the second heat in the second trim heat exchanger 214. Thus, at least one of the first heat or the second heat is absorbable from the fuel after the fuel exits the waste heat recovery heat exchanger 210.

The fuel thermal control system 200 includes a trim heat source 218 associated with the first trim heat exchanger 212. For example, the trim heat source 218 can include a fluid, such as booster flow, compressor bleed flow, an oil loop, an actuation loop, core exhaust waste heat, and/or interstage flow (e.g., between booster and high-pressure compressor (HPC)). When the trim heat source 218 includes the core exhaust waste heat, one difference between the trim heat source and the waste heat recovery heat exchanger 210 is that the waste heat recovery heat exchanger 210 is always on (e.g., receives an ongoing fuel flow) while the trim heat source 218 is on when needed (e.g., receives fuel flow during certain operations). Additionally, when the trim heat source 218 includes the core exhaust waste heat, the trim heat source 218 is in thermal communication with a different portion of the core exhaust waste heat than the waste heat recovery heat exchanger 210. Specifically, as the waste heat recovery heat exchanger 210 extracts a portion of the thermal energy available in the core exhaust waste heat, the trim heat source 218 can extract another portion of the thermal energy to take better advantage of the availability of the thermal energy in the core exhaust waste heat. Additionally or alternatively, the trim heat source 218 can include a structure that forms part of the first trim heat exchanger 212. For example, the trim heat source 218 can include a prop gearbox surface cooler, an indirect drive gearbox surface cooler, a compressor frame surface cooler, a turbine frame surface cooler, a HPC case surface cooler, a combustor case surface cooler, a low-pressure turbine (LPT) case surface cooler, and/or a high-pressure turbine (HPT) case surface cooler. In some examples, the first trim heat exchanger 212 includes an electrical heat exchanger. In such examples, a material through which electrical current flows, typically a high electrical resistance material, serves as the trim heat source 218. Further, the fuel thermal control system 200 includes a heat sink 220 associated with the second trim heat exchanger 214. For example, the heat sink 220 can include a fan bypass flow, a free stream flow, a ram air duct, and/or booster bleed.

In the illustrated example of FIG. 2, the fuel thermal control system 200 includes a first valve 222 (e.g., a trim heating control valve) and a second valve 224 (e.g., a trim cooling control valve). A position of the first valve 222 controls a flow rate of the fuel in the fuel flowline 204 that flows to the first trim heat exchanger 212 (e.g., from the trunk section 205 to the first branch section 207). A position of the second valve 224 controls a flow rate of the fuel in the fuel flowline 204 that flows to the second trim heat exchanger 214 (e.g., from the trunk section 205 to the second branch section 209). In some examples, the second valve 224 prevents the fuel from flowing to the second trim heat exchanger 214 when the first valve 222 causes the fuel to flow to the first trim heat exchanger 212, as discussed in further detail below. Similarly, in some examples, the first valve 222 prevents the fuel from flowing to the first trim heat exchanger 212 when the second valve 224 causes the fuel to flow to the second trim heat exchanger 214.

In the illustrated example of FIG. 2, the fuel thermal control system 200 includes a first mixer 226 and a second mixer 228 defined by and/or coupled to the fuel flowline 204. The first mixer 226 mixes a first portion (e.g., 50% of the fuel, 75% of the fuel, 30% of the fuel, 20% of the fuel, etc.) of the fuel that flowed to the first trim heat exchanger 212 (e.g., that traveled through the first branch section 207) with a second portion of the fuel that did not flow to the first trim heat exchanger 212 (e.g., that traveled past the first valve 222 and remained in the trunk section 205, 80% of the fuel, 70% of the fuel, 50% of the fuel, 25% of the fuel, etc.). As such, the first mixer 226 causes the first portion and the second portion of the fuel to mix to spread the thermal energy that the first portion of the fuel received via the first trim heat exchanger 212 evenly across the first portion and the second portion of the fuel. Similarly, the second mixer 228 mixes a third portion of the fuel (e.g., 50% of the fuel, 75% of the fuel, 30% of the fuel, 20% of the fuel, etc.) that flowed to the second trim heat exchanger 212 (e.g., that traveled through the second branch section 209) with a fourth portion (e.g., 80% of the fuel, 70% of the fuel, 50% of the fuel, 25% of the fuel, etc.) of the fuel that did not flow to the second trim heat exchanger 214 (e.g., that traveled past the second valve 224 and remained in the trunk section 205). The first mixer 226 and the second mixer 228 can include a direct valve to pipe mixer, a feed tank, and/or a turbulator. Specifically, a turbulator can include fins, twisted tapes, ribs, and/or other protrusions inside the fuel flowline 204 through which the fuel flows to disturb the flow, which causes different portions of the fuel having different temperatures to mix, which increases a convective heat transfer rate and improving a uniformity (e.g., a consistency) of a temperature of different portions of the fuel that flowed to different areas of the fuel thermal control system 200. In some examples, 100% of the fuel in the fuel flowline 204 flows to the first trim heat exchanger 212 or the second trim heat exchanger 214.

In some examples, when a fluid flows from the trim heat source 218 to the first trim heat exchanger 212 for a thermal energy transfer with the fuel, the fuel thermal control system 200 includes a third valve 230 coupled to a first secondary flowline 232 that fluidly couples the trim heat source 218 and the first trim heat exchanger 212. In such examples, a position of the third valve 230 controls a rate at which the fluid flows from the trim heat source 218 to the first trim heat exchanger 212. Similarly, when a fluid flows from the trim heat sink 220 to the second trim heat exchanger 214 for a thermal energy transfer with the fuel, the fuel thermal control system 200 includes a fourth valve 234 coupled to a second secondary flowline 236 that fluidly couples the trim heat sink 220 to the second trim heat exchanger 214. In such examples, the fourth valve 234 controls a rate at which the fluid flows from the trim heat sink 220 to the second trim heat exchanger 214.

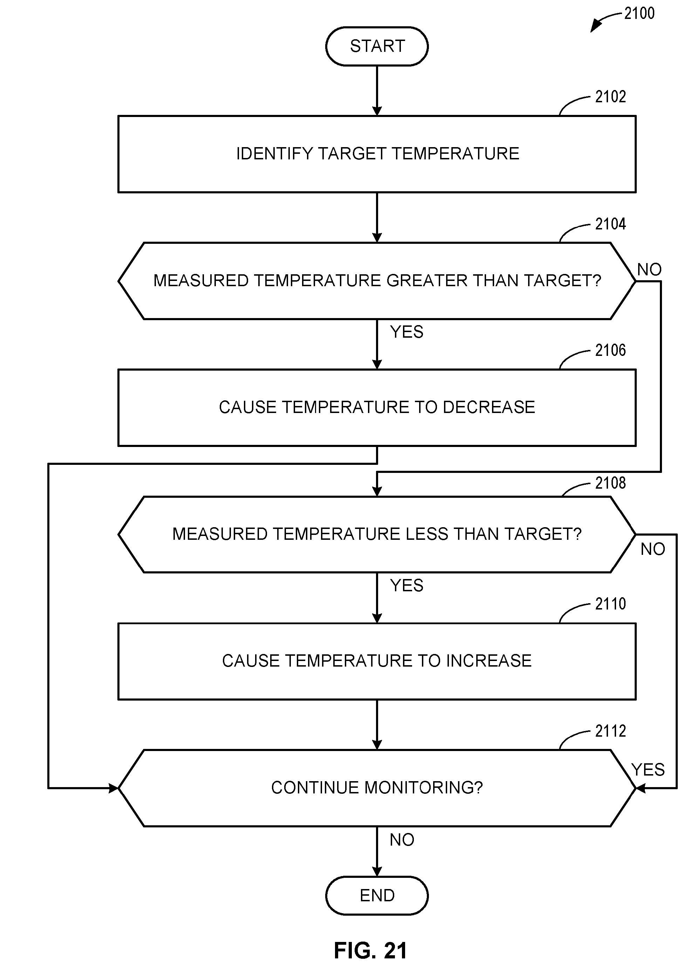

In the illustrated example of FIG. 2, the fuel thermal control system 200 includes one or more sensor(s) 238 to detect at least one parameter associated with the fuel in the fuel flowline 204, such as a temperature, a pressure, and/or a flow rate of the fuel. Additionally, the fuel thermal control system 200 includes fuel temperature control circuitry 240 to direct a flow of the fuel in the fuel flowline 204 and/or one or more other fluids associated with the heat source 218 and/or the heat sink 220 to control a temperature of the fuel injected into the combustor 118. The fuel temperature control circuitry 240 may be instantiated (e.g., creating an instance of, bring into being for any length of time, materialize, implement, etc.) by programmable circuitry such as a Central Processor Unit (CPU) executing first instructions. Additionally or alternatively, the fuel temperature control circuitry 240 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the fuel temperature control circuitry 240 may, thus, be instantiated at the same or different times. Some or all of the fuel temperature control circuitry 240 may be instantiated, for example, in one or more threads executing concurrently on hardware and/or in series on hardware. Moreover, in some examples, some or all of the fuel temperature control circuitry 240 may be implemented by microprocessor circuitry executing instructions and/or FPGA circuitry performing operations to implement one or more virtual machines and/or containers. In some examples, the fuel temperature control circuitry 240 is instantiated by programmable circuitry executing fuel temperature control circuitry instructions and/or configured to perform operations such as those represented by the flowchart of FIG. 21.

In the illustrated example of FIG. 2, the fuel temperature control circuitry 240 is communicatively coupled to the first trim heat exchanger 212, the second trim heat exchanger 214, the first valve 222, the second valve 224, the third valve 230, the fourth valve 234, and/or the sensor(s) 238. The fuel temperature control circuitry 240 can control a position of the first valve 222, the second valve 224, the third valve 230, and/or the fourth valve 234 to control a movement of the fuel in the fuel flowline 204, another fluid in the first secondary flowline 232, and/or another fluid in the second secondary flowline 236 based on the fuel parameter(s) measured by the sensor(s) 238. Additionally or alternatively, the fuel temperature control circuitry 240 can control an electrical signal (e.g., an electrical current, power, voltage, etc.) delivered to the first trim heat exchanger 212 and/or the second trim heat exchanger 214 to control a temperature the first trim heat exchanger 212 and/or the second trim heat exchanger 214 based on the fuel parameter(s) measured by the sensor(s) 238.

In some examples, the fuel temperature control circuitry 240 is communicatively coupled to the first trim heat exchanger 212 and/or the second trim heat exchanger 214 when the first trim heat exchanger 212 and/or the second trim heat exchanger 214 are electrical heat exchangers. In some examples, the fuel temperature control circuitry 240 is communicatively coupled to the third valve 230 and/or the fourth valve 234 when the first trim heat exchanger 212 and/or the second trim heat exchanger 214 are not electrical heat exchangers.

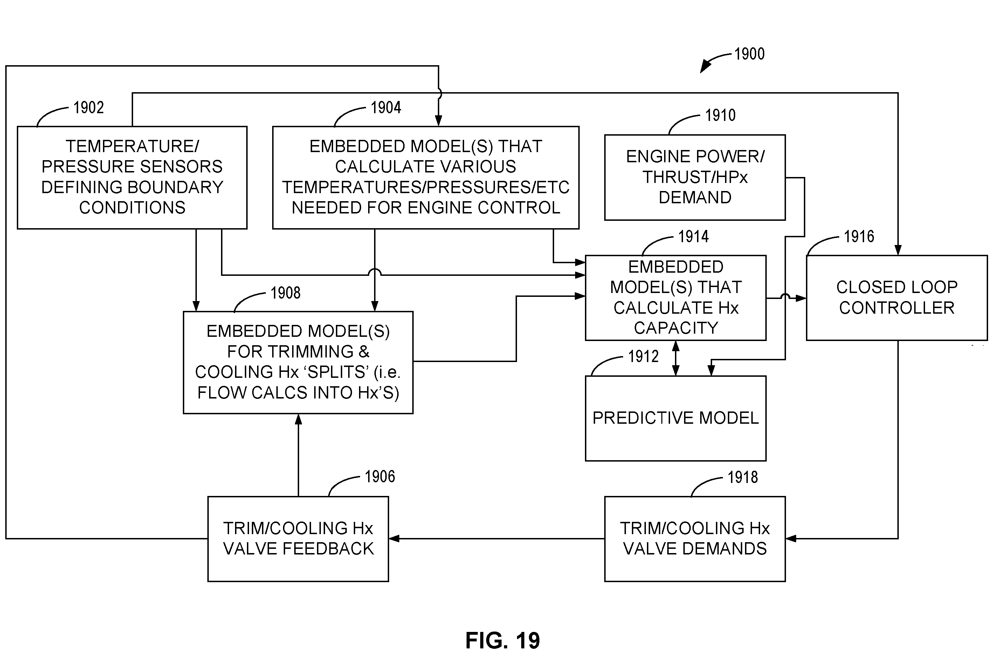

In the illustrated example of FIG. 2, the fuel temperature control circuitry 240 controls positions of the first valve 222, the second valve 224, the third valve 230, and/or the fourth valve 234 based on one or more measurements by the sensor(s) 238 and a target temperature at which the fuel is to be injected into the combustor 118. The target temperature can be based on a temperature range with which the combustor 118 is designed to work. For example, the combustor 118 can be designed to receive the fuel at a temperature between - 100 degrees Fahrenheit (°F) and 0°F or between 200°F and 300°F. For example, the target temperature can have a range of 0°F to 150°F when the fuel is hydrogen (e.g., H₂), which has a reduced temperature range for combustion relative to other fuels. Additionally or alternatively, the target temperature can have a range of 70°F to 300°F for Jet-A fuel without deoxygenation and a range of 70°F to 800°F for Jet-A fuel with deoxygenation. Such target temperatures ensure adequate combustion (e.g., for hydrogen fuel) and minimal fuel coking (e.g., for Jet-A fuel). The fuel temperature control circuitry 240 can determine the target temperature at which the fuel is to be injected into the combustor 118 based on an engine demand, as discussed in further detail in association with FIGS. 19-20.

In some examples, when an output temperature of the fuel (e.g., a temperature proximate an inlet of the fuel metering valves 206) is less than the target temperature, the fuel temperature control circuitry 240 causes the first valve 222 to move to a position (e.g., a partially open position, a fully open position) that increases a flow rate and/or ratio of the fuel that flows through the first branch section 207 and, thus, receives heat from the first trim heat exchanger 212. In some examples, when the output temperature of the fuel is less than the target temperature, the fuel temperature control circuitry 240 moves the second valve 224 to a position (e.g., a fully closed position) that prevents the fuel from flowing through the second branch section 209 and, thus, prevents the fuel from being cooled in the second trim heat exchanger 214. In some examples, when the output temperature of the fuel is less than the target temperature, the fuel temperature control circuitry 240 causes the third valve 230 to move to a position that increases a flow rate of the fluid from the heat source 218 to the first trim heat exchanger 212 in the first secondary flowline 232 to increase a rate at which the fluid transfers heat to the fuel in the first trim heat exchanger 212. When the first trim heat exchanger 212 includes the heat source 218 (e.g., when the first trim heat exchanger 212 is an electric heater or a fuel burner), the fuel thermal control system 200 does not include the first secondary flowline 232. In such instances, the fuel temperature control circuitry 240 can control an input (e.g., an electrical signal) delivered to the first trim heat exchanger 212 to control the temperature of the first trim heat exchanger 212 and, in turn, an amount of heat that the fuel receives in the first trim heat exchanger 212. That is, the fuel temperature control circuitry 240 activates the first trim heat exchanger 212 when the temperature of the fuel is less than the target temperature.

In some examples, when the output temperature of the fuel is greater than the target temperature, the fuel temperature control circuitry 240 causes the second valve 224 to move to a position (e.g., a partially open position, a fully open position) that increases a flow rate and/or ratio of the fuel that flows through the second branch section 209 and, thus, is cooled in the second trim heat exchanger 214. In some examples, when the output temperature of the fuel is greater than the target temperature, the fuel temperature control circuitry 240 causes the first valve 222 to move to a position (e.g., a fully closed position) that prevents the fuel from flowing through the first branch section 207 and, thus, prevents the fuel from receiving heat in the first trim heat exchanger 212. In some examples, when the output temperature of the fuel is greater than the target temperature, the fuel temperature control circuitry 240 causes the fourth valve 234 to move to a position that increases a flow rate of the fluid from the heat sink 220 to the second trim heat exchanger 214 in the second secondary flowline 236 to increase a rate at which the fluid absorbs heat from the fuel in the second trim heat exchanger 214. That is, the fuel temperature control circuitry 240 activates the second trim heat exchanger 214 when the temperature of the fuel is greater than the target temperature.

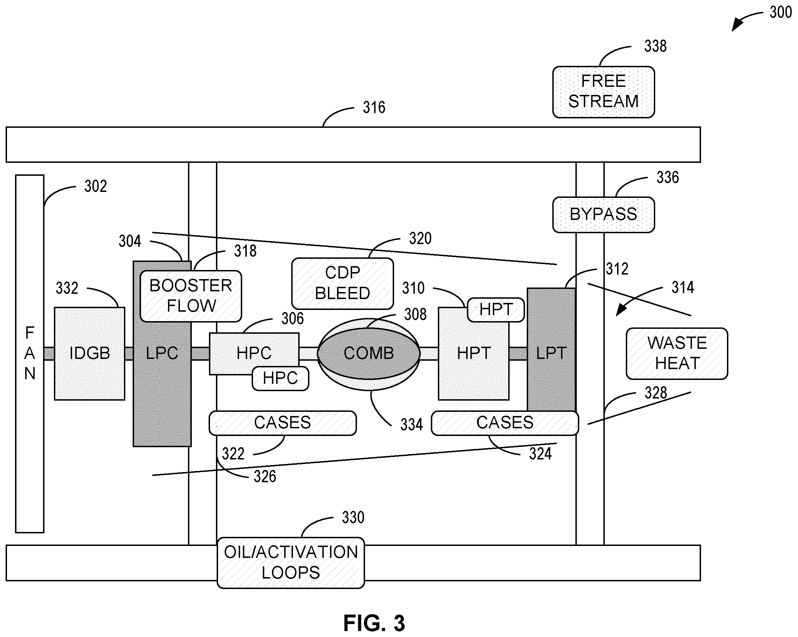

FIG. 3 is a schematic representation of an example location of the waste heat recovery heat exchanger 210 and example locations associated with the first trim heat exchanger 212 (FIG. 2), the second trim heat exchanger 214 (FIG. 2), trim heat source 218 (FIG. 2), and/or the trim heat sink 220 (FIG. 2) in an example turbofan engine 300 (e.g., the gas turbine engine 100 of FIG. 1). The turbofan engine 300 of FIG. 3 includes a fan section 302, a low-pressure compressor section 304, a high-pressure compressor section 306, a combustion section 308, a high-pressure turbine section 310, a low-pressure turbine section 312, an exhaust section 314 (e.g., the exhaust section 124 of FIG. 1), and an outer bypass duct 316 (e.g., the outer bypass duct 102 of FIG. 1). The waste heat recovery heat exchanger 210 is positioned in the exhaust section 314. In the illustrated example of FIG. 3, the trim heat source 218 and/or the first trim heat exchanger 212 can include and/or utilize a booster flow 318, a compressor bleed flow 320 (e.g., a CDP bleed), a high-pressure compressor (HPC) case surface 322, a high-pressure turbine (HPT) case surface 324, a compressor or fan frame surface 326, a turbine or rear frame surface 328, oil and/or actuation loops 330, an indirect drive gearbox (IDGB) 332, and/or a combustor case 334. In the illustrated example of FIG. 3, the trim heat sink 220 and/or the second trim heat exchanger 214 can include and/or utilize a fan bypass flow 336 and/or a free stream flow 338.

In some examples, the waste heat recovery heat exchanger 210 crosses the main flow path downstream of the rear frame surface 328, and the trim heat source 218 receives a smaller bleed off of the combustion gases 156 (FIG. 1) from the exhaust section 314 (e.g., relative to the full exhaust flow associated with the waste heat recovery heat exchanger 210). Accordingly, the source of fluid utilized to heat the fuel in the waste heat recovery heat exchanger 210 and the trim heat source 218 can be the same (e.g., the combustion gases 156 from the exhaust section 314), but utilization of two different heat exchangers with the exhaust section 314 source can result in increased total heat transfer to the fuel.

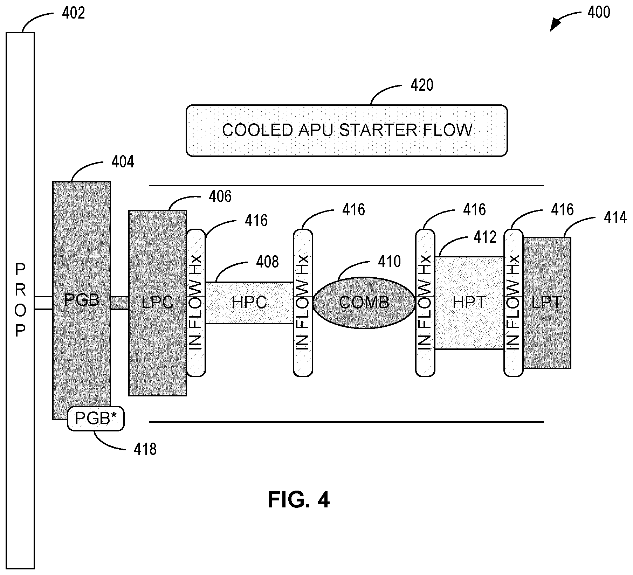

FIG. 4 is another schematic representation of example locations associated with the waste heat recovery heat exchanger 210 (FIG. 2), the first trim heat exchanger 212 (FIG. 2), the second trim heat exchanger 214 (FIG. 2), trim heat source 218 (FIG. 2), and/or the trim heat sink 220 (FIG. 2) in an example turboprop engine 400. In the illustrated example of FIG. 4, the turboprop engine 400 includes a prop section 402, a prop gearbox (PGB) section 404, a low-pressure compressor (LPC) section 406, a high-pressure compressor (HPC) section 408, a combustion section 410, a high-pressure turbine (HPT) section 412, and a low-pressure turbine (LPT) section 414. The waste heat recovery heat exchanger 210, the trim heat source 218, and/or the first trim heat exchanger can include and/or utilize one or more interstage flows 416 between (i) the LPC section 406 and the HPC section 408, (ii) the HPC section 408 and the combustion section 410, (iii) the combustion section 410 and the HPT section 412, and/or (iv) the HPT section 412 and the LPT section 414. Additionally or alternatively, the trim heat source 218 and/or the first trim heat exchanger can include and/or utilize a prop gearbox surface 418. The trim heat sink 220 and/or the second trim heat exchanger 214 can include and/or utilize cooled auxiliary power unit (APU) starter flow 420.

Although FIGS. 3 and 4 provide example implementations of the first trim heat exchanger 212, the second trim heat exchanger 214, the trim heat source 218, and/or the trim heat sink 220 in example engines 300, 400, it should be understood that the first trim heat exchanger 212, the second trim heat exchanger 214, the trim heat source 218, and/or the trim heat sink 220 can include and/or utilize another component of an engine associated with the fuel thermal control system 200 (FIG. 2). Additionally, it should be understood that the first trim heat exchanger 212, the second trim heat exchanger 214, the trim heat source 218, and/or the trim heat sink 220 can include and/or utilize another component outside of an engine (e.g., the gas turbine engine 100 of FIG. 1, the turbofan engine 300 of FIG. 3, the turboprop engine 400 of FIG. 4) associated with the fuel thermal control system 200. For example, the first trim heat exchanger 212, the second trim heat exchanger 214, the trim heat source 218, and/or the trim heat sink 220 can include and/or utilize electrical heat exchangers onboard an aircraft.

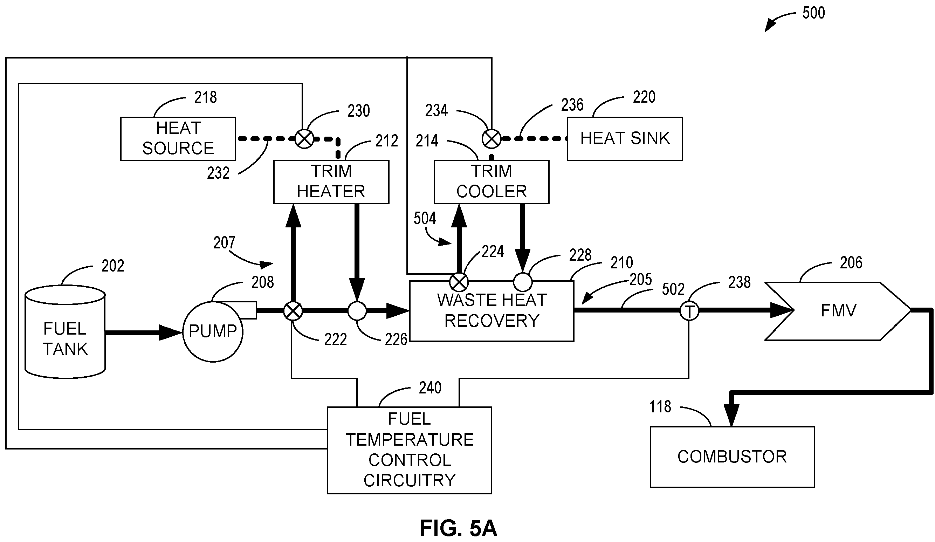

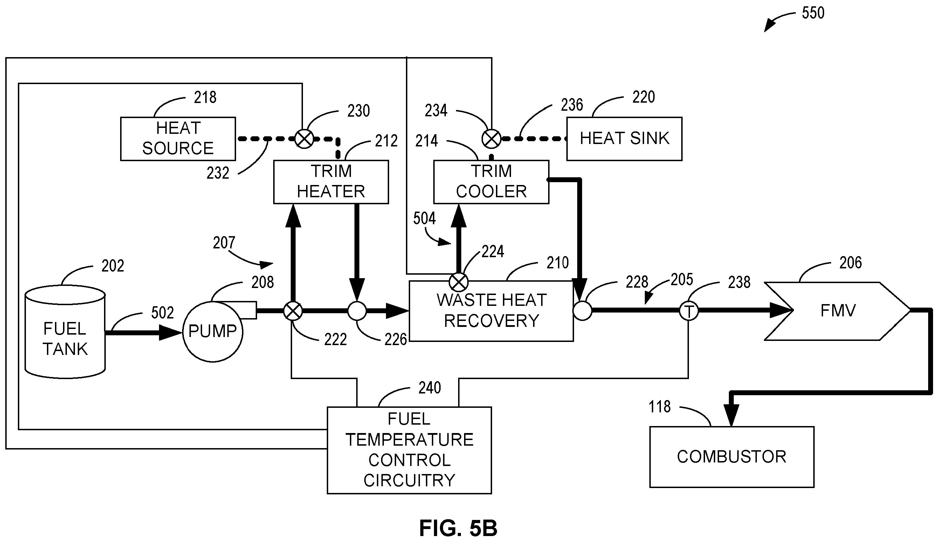

FIGS. 5A and 5B are schematic representations of additional example fuel thermal control systems 500, 550. In the illustrated example of FIGS. 5A and 5B, the fuel thermal control systems 500, 550 include the combustor 118, the fuel storage tank 202, the fuel metering valves 206, the fuel pump 208, the waste heat recovery heat exchanger 210, the first trim heat exchanger 212, the second trim heat exchanger 214, the trim heat source 218, the trim heat sink 220, the first valve 222, the second valve 224, the first mixer 226, the second mixer 228, the third valve 230, the first secondary flowline 232, the fourth valve 234, the second secondary flowline 236, the sensor(s) 238, and the fuel temperature control circuitry 240 of FIG. 2.

The fuel thermal control system 500, 550 of FIGS. 5A and 5B include another example flowline 502 to fluidly couple the fuel storage tank 202 to the combustor 118. Specifically, the flowline 502 includes the trunk section 205, the first branch section 207, and another example second branch section 504. The second branch section 504 of FIGS. 5A and 5B couples the second trim heat exchanger 214 directly to the waste heat recovery heat exchanger 210. Specifically, the second valve 224, from which the second branch section 504 extends, is positioned at an outlet of the waste heat recovery heat exchanger 210. In the illustrated example of FIG. 5A, the second mixer 228 is defined proximate (e.g., adjacent) to an inlet of the waste heat recovery heat exchanger 210 to mix the relatively cooler fuel from the second trim heat exchanger 214 with the relatively hotter fuel in the waste heat recovery heat exchanger 210 when a temperature of the fuel is to be reduced. In the illustrated example of FIG. 5B, the mixer 228 is coupled to another outlet of the waste heat recovery heat exchanger 210 and/or the trunk section 205 downstream of the waste heat recovery heat exchanger 210 to mix the relatively cooler fuel from the second trim heat exchanger 214 with the relatively hotter fuel that exited or is exiting the waste heat recovery heat exchanger 210. For example, when the target temperature is 75°F with a +/- 25°F range, the fuel temperature control circuitry 240 can cause the second valve 224 and/or the fourth valve 234 to actuate (e.g., open) when the temperature measured by the sensor(s) 238 is 85°F to help ensure that the temperature of the fuel being injected into the combustor 118 remains in (e.g., does not exceed) the target temperature range.

In the illustrated example of FIGS. 5A and 5B, the fuel temperature control circuitry 240 controls positions of the first valve 222, the second valve 224, the third valve 230, and/or the fourth valve 234 based on one or more measurements (e.g., a temperature measurement(s), a pressure measurement(s), a flow rate measurement(s), etc.) by the sensor(s) 238 and a target temperature at which the fuel is to be injected into the combustor 118.

In some examples, when an output temperature of the fuel (e.g., a temperature proximate an inlet of the fuel metering valves 206) is less than the target temperature, the fuel temperature control circuitry 240 causes the first valve 222 to move to a position (e.g., a partially open position, a fully open position) that increases a flow rate and/or ratio of the fuel that flows through the first branch section 207 and, thus, receives heat from the first trim heat exchanger 212. In some examples, when the output temperature of the fuel is less than the target temperature, the fuel temperature control circuitry 240 moves the second valve 224 to a position (e.g., a fully closed position) that prevents the fuel from flowing through the second branch section 504 and, thus, prevents the fuel from being cooled in the second trim heat exchanger 214. In some examples, when the output temperature of the fuel is less than the target temperature, the fuel temperature control circuitry 240 causes the third valve 230 to move to a position that increases a flow rate of the fluid from the heat source 218 to the first trim heat exchanger 212 in the first secondary flowline 232 to increase a rate at which the fluid transfers heat to the fuel in the first trim heat exchanger 212.

In some examples, when the output temperature of the fuel is greater than the target temperature, the fuel temperature control circuitry 240 causes the second valve 224 to move to a position (e.g., a partially open position, a fully open position) that increases a flow rate and/or ratio of the fuel that flows through the second branch section 504 and, thus, is cooled in the second trim heat exchanger 214. In some examples, when the output temperature of the fuel is greater than the target temperature, the fuel temperature control circuitry 240 causes the first valve 222 to move to a position (e.g., a fully closed position) that prevents the fuel from flowing through the first branch section 207 and, thus, prevents the fuel from receiving heat in the first trim heat exchanger 212. In some examples, when the output temperature of the fuel is greater than the target temperature, the fuel temperature control circuitry 240 causes the fourth valve 234 to move to a position that increases a flow rate of the fluid from the heat sink 220 to the second trim heat exchanger 214 in the second secondary flowline 236 to increase a rate at which the fluid absorbs heat from the fuel in the second trim heat exchanger 214.

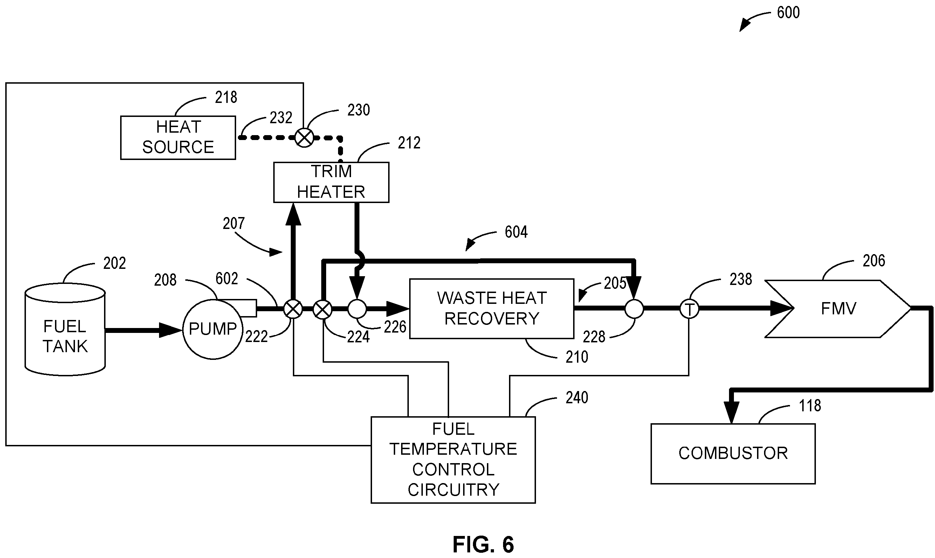

FIG. 6 is a schematic representation of another example fuel thermal control system 600. In the illustrated example of FIG. 6, the fuel thermal control system 600 includes the combustor 118, the fuel storage tank 202, the fuel metering valves 206, the fuel pump 208, the waste heat recovery heat exchanger 210, the first trim heat exchanger 212, the trim heat source 218, the first valve 222, the second valve 224, the first mixer 226, the second mixer 228, the third valve 230, the first secondary flowline 232, the sensor(s) 238, and the fuel temperature control circuitry 240 of FIG. 2.

The fuel thermal control system 600 of FIG. 6 includes another example flowline 602 to fluidly couple the fuel storage tank 202 to the combustor 118. Specifically, the flowline 602 includes the trunk section 205, the first branch section 207, and another example second branch section 604. Although the first branch section 207 is shown coupled to the trunk section 205 upstream of the waste heat recovery heat exchanger 210, the first branch section 207 can be coupled to the trunk section 205 downstream of the waste heat recovery heat exchanger 210. The second branch section 604 is coupled to the second valve 224 and the second mixer 228. In the fuel thermal control system 600 of FIG. 6, the second valve 224 is coupled to the trunk section 205 upstream of the waste heat recovery heat exchanger 210, and the second mixer 228 is coupled to the trunk section 205 downstream of the waste heat recovery heat exchanger 210. As such, the second branch section 604 enables a relatively colder portion of the fuel to bypass the waste heat recovery heat exchanger 210 and mix with a relatively hotter portion of the fuel in the second mixer 228 when a temperature of the fuel is to be reduced. In some examples, when the waste heat recovery heat exchanger 210 is undersized for at least some operations of the engine 100, the second branch section 604 can be removed as the fuel heated by the waste heat recovery heat exchanger 210 will not be overheated.

In the illustrated example of FIG. 6, the fuel temperature control circuitry 240 controls positions of the first valve 222, the second valve 224, and/or the third valve 230, based on one or more measurements by the sensor(s) 238 and a target temperature at which the fuel is to be injected into the combustor 118. In some examples, when an output temperature of the fuel (e.g., a temperature proximate an inlet of the fuel metering valves 206) is less than the target temperature, the fuel temperature control circuitry 240 causes the first valve 222 to move to a position (e.g., a partially open position, a fully open position) that increases a flow rate and/or ratio of the fuel that flows through the first branch section 207 and, thus, receives heat from the first trim heat exchanger 212. In some examples, when the output temperature of the fuel is less than the target temperature, the fuel temperature control circuitry 240 moves the second valve 224 to a position (e.g., a fully closed position) that prevents the fuel from flowing through the second branch section 604 and, thus, prevents the fuel from bypassing the waste heat recovery heat exchanger 210. In some examples, when the output temperature of the fuel is less than the target temperature, the fuel temperature control circuitry 240 causes the third valve 230 to move to a position that increases a flow rate of the fluid from the heat source 218 to the first trim heat exchanger 212 in the first secondary flowline 232 to increase a rate at which the fluid transfers heat to the fuel in the first trim heat exchanger 212. The output temperature can be less than the target temperature during thrust reverse operations, emergency operations, and/or fine adjustments to get to a desired cruising altitude/speed. Accordingly, the fuel temperature control provided by the fuel thermal control system 600 enables the engine 100 to obtain responsive thrust that dynamically adjusts to the intended operations.

In some examples, when the output temperature of the fuel is greater than the target temperature, the fuel temperature control circuitry 240 causes the second valve 224 to move to a position (e.g., a partially open position, a fully open position) that increases a flow rate and/or ratio of the fuel that flows through the second branch section 604 and, thus, bypasses the waste heat recovery heat exchanger 210. In some examples, when the output temperature of the fuel is greater than the target temperature, the fuel temperature control circuitry 240 causes the first valve 222 to move to a position (e.g., a fully closed position) that prevents the fuel from flowing through the first branch section 207 and, thus, prevents the fuel from receiving heat in the first trim heat exchanger 212.

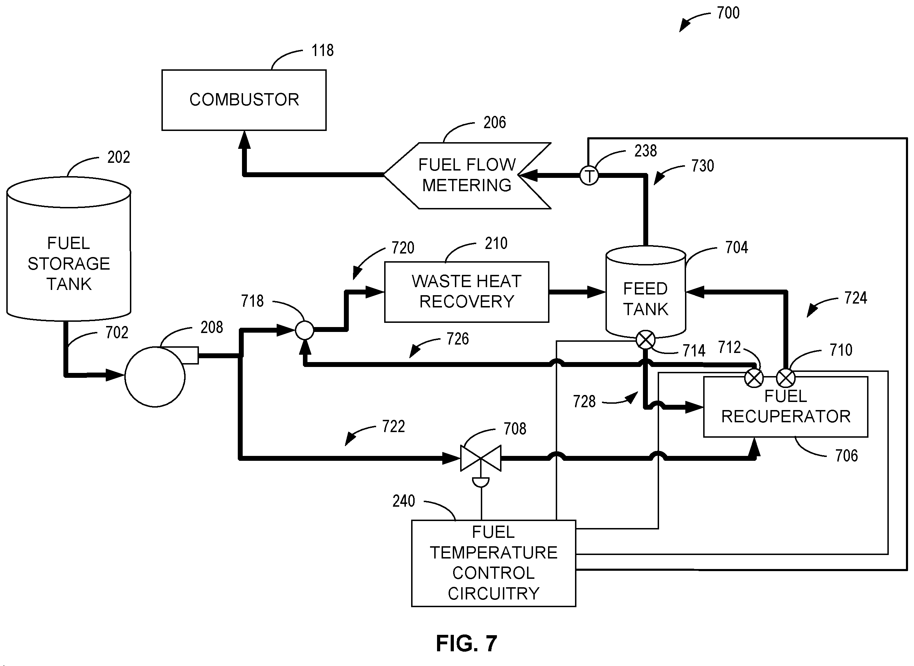

FIG. 7 is a schematic representation of another example fuel thermal control system 700. The fuel thermal control system 700 includes the combustor 118, the fuel storage tank 202, the fuel metering valves 206, the fuel pump 208, the waste heat recovery heat exchanger 210, the sensor(s) 238, and the fuel temperature control circuitry 240 of FIGS. 2, 5, and 6. The fuel thermal control system 700 of FIG. 7 also includes a flowline 702, a feed tank 704 (e.g., a mixing tank), a recuperator 706 (e.g., a fuel recuperator), a first valve 708, a second valve 710, a third valve 712, a fourth valve 714, and a mixer 718.

In the illustrated example of FIG. 7, the feed tank 704 facilitates mixing of different portions of the fuel from different areas of the fuel thermal control system 700. Specifically, the different portions of the fuel have different temperatures as a result of flowing to different areas of the fuel thermal control system 700. As a result, the feed tank 704 causes the different portions of the fuel in the feed tank 704 to mix to obtain a more uniform temperature (e.g., within 2°F, within 5°F, within 10°F) prior to the fuel being injected into the combustor 118. In some examples, inlets of the feed tank 704 are defined in an opposite end of the feed tank 704 from outlets of the feed tank 704. For example, the inlets of the feed tank 704 can be defined in a lower corner (e.g., a bottom left corner), and the outlets of the feed tank 704 can be defined in an upper corner (e.g., a top right corner) opposite the lower corner. In some examples, the feed tank 704 includes baffles to increase a fluid residence time in the feed tank 704. In some examples, the feed tank 704 includes turbulators, screens, swirlers, and/or other turbulence promotion features to facilitate mixing different portions of the fuel that have different temperatures and/or to avoid dead zones (e.g., areas lacking flow in the feed tank 704). In some examples, the feed tank 704 includes electrically and/or pneumatically driven components (e.g., pumps) to facilitate mixing and/or avoid dead zones.

In the illustrated example of FIG. 7, the recuperator 706 causes the fuel to exchange thermal energy with air in or from a compressor (e.g., the LP compressor 114 of FIG. 1, the HP compressor 116 of FIG. 1) upstream of the combustor 118. During some operations, the air transfers heat to the fuel in the recuperator 706. During some other operations, the fuel transfers heat to the air in the recuperator 706. The recuperator 706 is a heat exchanger configured with solid walls to enable fluids to exchange thermal energy through the solid walls without mixing. Streams defined by the recuperator 706 can be configured in a crossflow relationship and/or in a counterflow relationship. The recuperator 706 can include heat transfer enhancement components, such as turbulators, dimples, etc., and/or extended surfaces, such as fins and/or pins, to increase the overall heat transfer rate. The recuperator 706 can be a tube and shell configuration, a plate-fin configuration, a printed-circuit configuration (e.g., formed by milling or etching channels into plates and stacking those plates to form the heat exchanger passages), or another canonical configuration that contains the pressures of the fuel system.

In the illustrated example of FIG. 7, the flowline 702 includes different sections to carry the fuel from the fuel pump 208 to different components of the fuel thermal control system 700. The flowline 702 includes a first section 720 that carries the fuel from the fuel pump 208 to the waste heat recovery heat exchanger 210 and, in turn, the feed tank 704. The flowline 702 includes a second section 722 that carries the fuel from the fuel pump 208 to the recuperator 706. The flowline 702 includes a third section 724 that carries the fuel from the recuperator 706 to the feed tank 704. The flowline 702 includes a fourth section 726 that carries the fuel from the recuperator 706 to the mixer 718. Specifically, the mixer 718 couples the fourth section 726 of the flowline 702 to the first section 720 and mixes the fuel from the recuperator 706 with the fuel from the fuel pump 208 upstream of the waste heat recovery heat exchanger 210. Further, the flowline 702 includes a fifth section 728 that carries the fuel from the feed tank 704 to the recuperator 706. The flowline 702 also includes a sixth section 730 that carries the fuel from the feed tank 704 to the fuel metering valves 206 and, in turn, to the combustor 118. The sensor(s) 238 are coupled to the sixth section 730 of the flowline 702 to measure one or more parameters (e.g., temperature, pressure, etc.) of the fuel being injected into the combustor 118.

In the illustrated example of FIG. 7, the first valve 708 is coupled to the second section 722 of the flowline 702. As such, a position of the first valve 708 controls a flow rate of the fuel from the fuel pump 208 to the recuperator 706. In some examples, the first valve 708 is coupled to the flowline 702 where the second section 722 intersects with (e.g., separates from) the first section 720. In some examples, the first valve 708 is positioned at an inlet of the recuperator 706. The second valve 710 is coupled to the third section 724 of the flowline 702 and/or a first outlet of the recuperator 706. As such, a position of the second valve 710 controls a flow rate of the fuel from the recuperator 706 to the feed tank 704. The third valve 712 is coupled to the fourth section 726 of the flowline 702 and/or a second outlet of the recuperator 706. As such, a position of the third valve 712 controls a flow rate of the fuel from the recuperator 706 to the mixer 718. The fourth valve 714 is coupled to the fifth section 728 of the flowline 702 and/or a first outlet of the feed tank 704. As such, a position of the fourth valve 714 controls a flow rate of the fuel from the feed tank 704 to the recuperator 706.

In the illustrated example of FIG. 7, the fuel temperature control circuitry 240 controls the valves 708, 710, 712, 714 (e.g., positions of the valves 708, 710, 712, 714) to control a flow of the fuel in the fuel thermal control system 700 and a temperature at which the fuel is injected into the combustor 118. Specifically, the fuel temperature control circuitry 240 controls the positions of the valves 708, 710, 712, 714 based on at least an output temperature measurement by the sensor(s) 238 and a target temperature at which the fuel is to be injected into the combustor 118.

In some examples, the engine 100 associated with the fuel thermal control system 700 utilizes an electrical heat exchanger, an auxiliary power unit, cross engine bleed, and/or another heat source to heat the fuel for startup. In some examples, the feed tank 704 includes the electric heater to maintain a fuel mass in the feed tank 704 at a target temperature. In such examples, the fuel mass in the feed tank 704 can be drained (e.g., injected into the combustor 118) for startup and refreshed (e.g., rebuilt) as operations develop.

In the illustrated example of FIG. 7, the valves 708, 710, 712, 714 can be opened to various positions ranging between 0% (e.g., fully closed) and 100% (e.g., fully open) based on operations associated with the engine 100 and a target fuel flow and/or temperature associated with a desired engine output. In some examples, when (i) an output temperature (e.g., a temperature proximate an inlet of the fuel metering valves 206) of the fuel is less than the target temperature and (ii) a difference between the output temperature of the fuel and the target temperature is less than a threshold difference, the fuel temperature control circuitry 240 (i) causes the first valve 708 to move to a position (e.g., a partially closed position, a fully closed position) that reduces a flow rate and/or ratio of the fuel that flows through the second section 722, which prevents or reduces a ratio of the fuel that bypasses the waste heat recovery heat exchanger 210, and (ii) causes the fourth valve 714 to move to a position (e.g., a fully closed position) that prevents the fuel from flowing through the fifth section 728. In some examples, when (i) the output temperature of the fuel is less than the target temperature and (ii) the difference between the output temperature of the fuel and the target temperature is greater than or equal to a threshold difference, the fuel temperature control circuitry 240 (i) causes the first valve 708 to move to a position (e.g., a partially open position, a fully open position) that increases a flow rate and/or ratio of the fuel that flows through the second section 722, (ii) causes the second valve 710 to move to a position (e.g., a fully closed position) that prevent the fuel from flowing through the third section 724, (iii) causes the third valve 712 to move to a position (e.g., a partially open position, a fully open position) that increases a flow rate and/or ratio of the fuel that flows through the fourth section 726, and (iv) causes the fourth valve 714 to move to a position (e.g., a fully closed position) that prevents the fuel from flowing through the fifth section 728.

In some examples, when (i) the output temperature of the fuel is less than the target temperature and (ii) the difference between the output temperature of the fuel and the target temperature is greater than or equal to a threshold difference, the fuel temperature control circuitry 240 (i) causes the first valve 708 to move to a position (e.g., a partially closed position, a fully closed position) that prevents or a reduces a flow rate or ratio of the fuel that flows through the second section 722, (ii) causes the second valve 710 to move to a position (e.g., a fully closed position) that prevent the fuel from flowing through the third section 724, (iii) causes the third valve 712 to move to a position (e.g., a partially open position, a fully open position) that increases a flow rate and/or ratio of the fuel that flows through the fourth section 726, and (iv) causes the fourth valve 714 to move to a position (e.g., a partially open position, a fully open position) that causes an increased flow rate and/or ratio of the fuel to flow through the fifth section 728. In such examples, the fuel temperature control circuitry enables the fuel to pass through, and receive heat in, the waste heat recovery heat exchanger 210 more than once before being injected into the combustor 118.

In some examples, when an output temperature of the fuel is greater than the target temperature, the fuel temperature control circuitry 240 causes the first valve 708 to move to a position (e.g., a partially open position, a fully open position) that increases a flow rate and/or ratio of the fuel that flows through the second section 722 of the flowline 702 and, thus, enables more of the fuel to bypass the waste heat recovery heat exchanger 210. For example, the fuel temperature control circuitry 240 can increase the flow through the second section 722 of the flowline 702 for a burst maneuver (e.g., transient operation) and/or an off-design point operation that may warrant fuel temperature mitigation. In some examples, the fuel temperature control circuitry 240 determines a magnitude of an opening provided by the first valve 708 (e.g., between 0% open and 100% open) based on a difference between the temperature measured by the sensor(s) 238 and the target temperature. After the sensor(s) 238 measure a lower temperature that is within a threshold range of the target temperature, the fuel temperature control circuitry 240 causes the first valve 708 to close to block flow through the second section 722 of the flowline 702.

In some examples, when the output temperature of the fuel is greater than the target temperature, the fuel temperature control circuitry 240 (i) causes the second valve 710 to move to a position (e.g., a partially open position, a fully open position) that increases a flow rate and/or ratio of the fuel that flows through the third section 724 and (ii) causes the third valve 712 to move to a position (e.g., a fully closed position) that prevents the fuel from flowing through the fourth section 726 and receiving heat in the waste heat recovery heat exchanger 210. In some examples, when the output temperature of the fuel is greater than the target temperature, the fuel temperature control circuitry 240 causes the fourth valve 714 to move to a position (e.g., a partially open position, a fully open position) that increases a flow rate and/or ratio of the fuel that flows through the fifth section 728 to enable relatively hotter fuel in the feed tank 704 to dissipate heat in the recuperator 706.

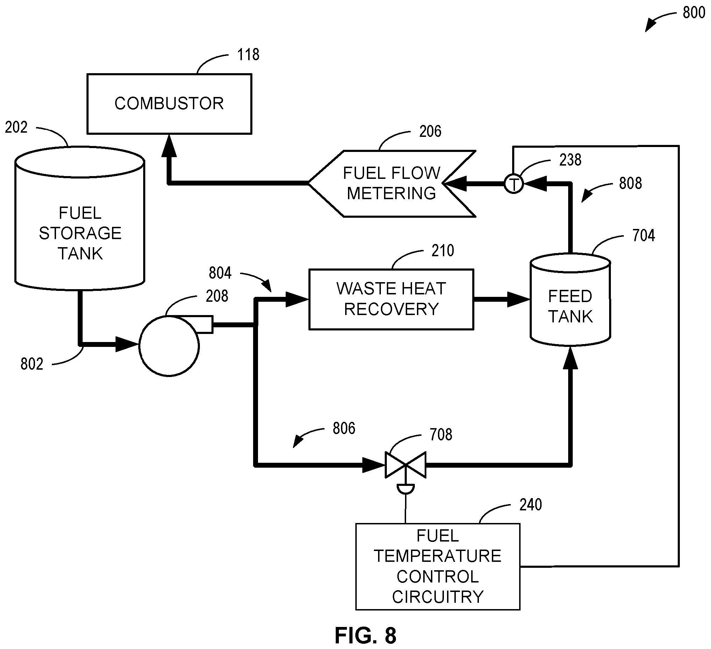

FIG. 8 is a schematic representation of another example fuel thermal control system 800. The fuel thermal control system 800 includes the combustor 118, the fuel storage tank 202, the fuel metering valves 206, the fuel pump 208, the waste heat recovery heat exchanger 210, the sensor(s) 238, the fuel temperature control circuitry 240, the feed tank 704, and the first valve 708 of FIGS. 2, 5, 6, and/or 7. The fuel thermal control system 800 of FIG. 8 also includes a flowline 802 to carry the fuel from the fuel storage tank 202 to the combustor 118. The flowline 802 includes a first section 804 that carries the fuel from the fuel pump 208 to the waste heat recovery heat exchanger 210 and, in turn, the feed tank 704. The flowline 802 includes a second section 806 that carries the fuel from the fuel pump 208 to the feed tank 704. Further, the flowline 802 includes a third section 808 that carries the fuel from the feed tank 704 to the fuel metering valves 206 and, in turn, to the combustor 118.

In the illustrated example of FIG. 8, the fuel temperature control circuitry 240 controls a position of the first valve 708 to control (i) a flow rate of a first portion the fuel that bypasses the waste heat recovery heat exchanger 210 to enter the feed tank 704 and (ii) a flow rate of a second portion of the fuel that flows through the waste heat recovery heat exchanger 210 prior to entering the feed tank 704. As such, the fuel temperature control circuitry 240 controls a ratio of the first portion of the fuel to the second portion of the fuel via the first valve 708 to control a temperature of the fuel in the feed tank 704. The fuel temperature control circuitry 240 controls the ratio based on at least a temperature measurement by the sensor(s) 238 and a target temperature at which the fuel is to be injected into the combustor 118.

In some examples, when an output temperature of the fuel (e.g., a temperature proximate an inlet of the fuel metering valves 206) is less than the target temperature, the fuel temperature control circuitry 240 causes the first valve 708 to move to a position (e.g., a further closed position, a fully closed position) that prevents the fuel from flowing through the second section 806 or reduces a flow rate and/or ratio at which the fuel flows through the second section 806 to prevent the fuel from bypassing the waste heat recovery heat exchanger 210 en route to the combustor 118 and/or reduce a portion of the fuel that bypasses the waste heat recovery heat exchanger 210 en route to the combustor 118. In some examples, when the output temperature of the fuel is greater than the target temperature, the fuel temperature control circuitry 240 causes the first valve 708 to move to a position (e.g., a further open position, a fully open position) that increases a flow rate and/or ratio of the fuel that flows through the second section 806 and, thus, bypasses the waste heat recovery heat exchanger 210 en route to the combustor 118.

The fuel thermal control system 800 of FIG. 8 enables fuel temperature control at a reduced cost and with reduced complexity relative to the fuel thermal control system 700 of FIG. 7. However, the fuel thermal control system 700 of FIG. 7 can enable more granular temperature control through utilization of additional heating and/or cooling options beyond those shown in the fuel thermal control system 800 of FIG. 8.

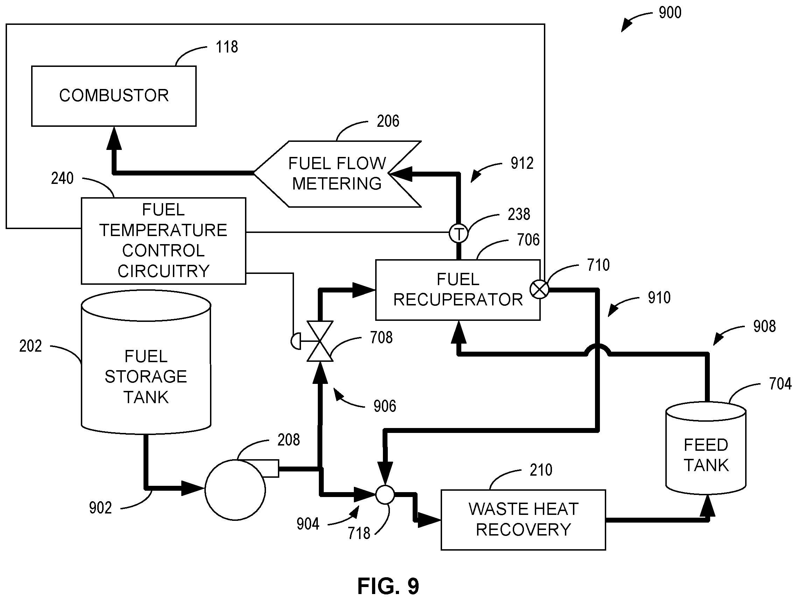

FIG. 9 is a schematic representation of another example fuel thermal control system 900. The fuel thermal control system 900 includes the combustor 118, the fuel storage tank 202, the fuel metering valves 206, the fuel pump 208, the waste heat recovery heat exchanger 210, the sensor(s) 238, the fuel temperature control circuitry 240, the feed tank 704, the recuperator 706, the first valve 708, the second valve 710, the third valve 712, and the mixer 718 of FIGS. 2, 5, 6, 7, and/or 8. The fuel thermal control system 900 of FIG. 9 also includes a flowline 902 to carry the fuel from the fuel storage tank 202 to the combustor 118. The flowline 902 includes a first section 904 that carries the fuel from the fuel pump 208 to the waste heat recovery heat exchanger 210 and, in turn, the feed tank 704. The flowline 902 includes a second section 906 that carries the fuel from the fuel pump 208 and/or the first section 904 to the recuperator 706. The flowline 902 includes a third section 908 that carries the fuel from the feed tank 704 to the recuperator 706. The flowline 902 includes a fourth section 910 that carries the fuel from the recuperator 706 to the mixer 718. Specifically, the mixer 718 couples the fourth section 910 to the first section 904 and mixes the fuel from the recuperator 706 with the fuel from the fuel pump 208 upstream of the waste heat recovery heat exchanger 210. Further, the flowline 902 includes a fifth section 912 that carries the fuel from the recuperator 706 to the fuel metering valves 206 and, in turn, to the combustor 118.

In the illustrated example of FIG. 9, the first valve 708 is coupled to the second section 906 of the flowline 902. As such, a position of the first valve 708 controls a flow rate of the fuel from the fuel pump 208 to the recuperator 706 and/or a ratio of the fuel from the fuel pump 208 that flows through the first section 904 versus the second section 906. The second valve 710 is coupled to a first outlet of the recuperator 706 and/or the fourth section 910 of the flowline 902. As such, a position of the second valve 710 controls a flow rate of the fluid from the recuperator 706 to the mixer 718 and, in turn, the waste heat recovery heat exchanger 210.

In the illustrated example of FIG. 9, the fuel temperature control circuitry 240 controls a position of the first valve 708 to control (i) a flow rate of a first portion the fuel that flows through the second section 906 from the fuel pump 208 to the recuperator 706 and (ii) a flow rate of a second portion of the fuel that flows through the first section 904 (e.g., through the waste heat recovery heat exchanger 210 and into the feed tank 704) without entering the second section 906. As such, the fuel temperature control circuitry 240 controls a ratio of the first portion of the fuel to the second portion of the fuel via the first valve 708 to control a temperature of the fuel in the recuperator 706. The fuel temperature control circuitry 240 controls a position of the second valve 710 to control a flow rate of the fuel that flows through the fourth section 910 of the flowline 902 from the recuperator 706 to the mixer 718. The fuel that flows through the fourth section 910 can increase a temperature of the fuel flowing to the waste heat recovery heat exchanger 210 such that the fuel at an output of the waste heat recovery heat exchanger 210 has an increased temperature.

As such, for example, when a target fuel temperature of the fuel is greater than the temperature measured by the sensor(s) 238, the fuel temperature control circuitry 240 can cause the second valve 710 to move to a further open position to increase the temperature of the fuel. Additionally or alternatively, when the target fuel temperature of the fuel is greater than the temperature measured by the sensor(s) 238, the fuel temperature control circuitry 240 can cause the first valve 708 to move to a further closed position to reduce the ratio of the first portion of the fuel to the second portion of the fuel to increase the temperature of the fuel. When the target fuel temperature is less than the temperature measured by the sensor(s) 238, the fuel temperature control circuitry 240 can cause the first valve 708 to move to a further open position and/or move the second valve 710 to a further closed position to reduce the temperature of the fuel.

The fuel thermal control system 900 of FIG. 9 can be utilized in similar scenarios to those associated with the fuel thermal control systems 700, 800 of FIGS. 7 and 8. However, the fuel thermal control systems 700, 800 of FIGS. 7 and 8 may be advantageous in steady-state operations with an off-design point target fuel temperature. For example, the fuel thermal control system 900 of FIG. 9 can provide advantageous cooling for certain transient operations, but dynamic temperature stability may occur with continuous use of the second section 906 of the flowline 902.

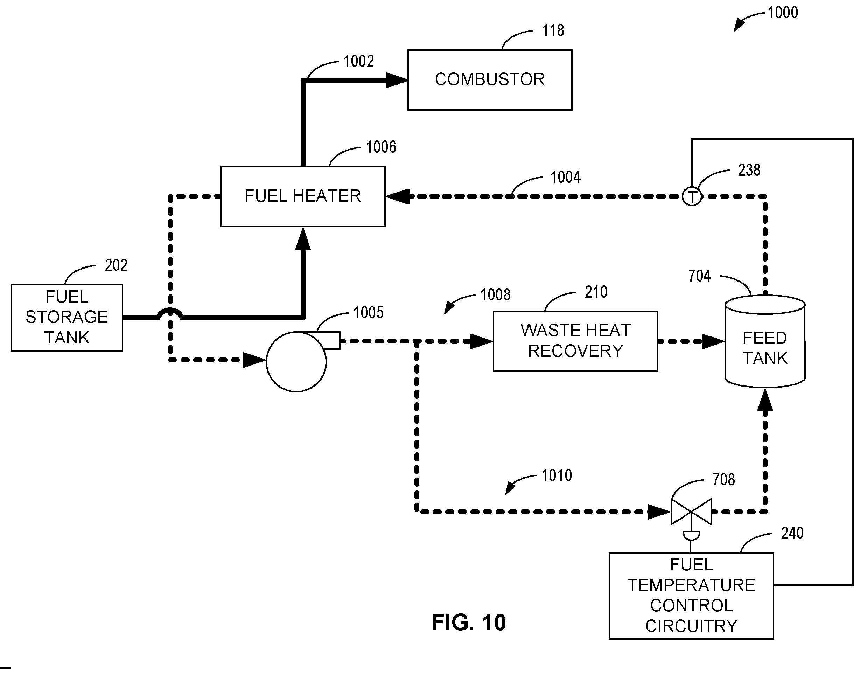

FIG. 10 is a schematic representation of another fuel thermal control system 1000. In the illustrated example of FIG. 10, the fuel thermal control system 1000 includes a fuel flowline 1002 and a heat exchange fluid flowline 1004 that are coupled to a fuel heater 1006 (e.g., a fuel heat exchanger). A first end of the fuel flowline 1002 is coupled to the fuel storage tank 202, and a second end of the fuel flowline 1002 is coupled to the combustor 118. As such, the fuel flowline 1002 carries fuel from the fuel storage tank to the fuel heater 1006 and to the combustor 118. The heat exchange fluid flowline 1004 defines a closed loop for a heat exchange fluid (e.g., a closed-loop flow path) and is coupled to a heat exchange fluid pump 1005, the waste heat recovery heat exchanger 210, and the feed tank 704 in addition to the fuel heater 1006. The fuel heater 1006 causes the heat exchange fluid to transfer heat to the fuel before the fuel is injected into the combustor 118. As such, in the fuel thermal control system 1000 of FIG. 10, the temperature of the fuel is controlled indirectly through the temperature of the heat exchange fluid. In some examples, the heat exchange fluid includes nitrogen, carbon dioxide (e.g., supercritical carbon dioxide), an inert gas, or another fluid.

In the illustrated example of FIG. 10, the heat exchange fluid flowline 1004 includes a main loop 1008 and a waste heat bypass section 1010. Specifically, the main loop 1008 includes the waste heat recovery heat exchanger 210, and the waste heat bypass section 1010 is coupled to a portion of the main loop 1008 upstream of the waste heat recovery heat exchanger 210 and extends to the feed tank 704. As such, the waste heat bypass section 1010 enables a first portion of the heat exchange fluid to bypass the waste heat recovery heat exchanger 210. The relatively colder first portion of the heat exchange fluid then mixes with a relatively hotter second portion of the heat exchange fluid that passed through the waste heat recovery heat exchanger 210 in the feed tank 704. As a result, the first and second portions of the heat exchange fluid obtain a middle ground temperature before flowing through an outlet of the feed tank 704 and to the fuel heater 1006. The middle ground temperature can be controlled through control of a ratio of a first flow rate of the first portion of the heat exchange fluid to a second flow rate of the second portion of the heat exchange fluid. In some examples, the ratio of the first flow rate of the first portion of the heat exchange fluid to the second flow rate of the second portion of the heat exchange fluid is based on a temperature and/or heat transfer rate associated with the waste heat recovery heat exchanger 210.

In the illustrated example of FIG. 10, the sensor(s) 238 are coupled to the heat exchange fluid flowline 1004 between the feed tank 704 and the fuel heater 1006. As such, in the fuel thermal control system 1000 of FIG. 10, the sensor(s) 238 measure a temperature of the heat exchange fluid input into the fuel heater 1006.

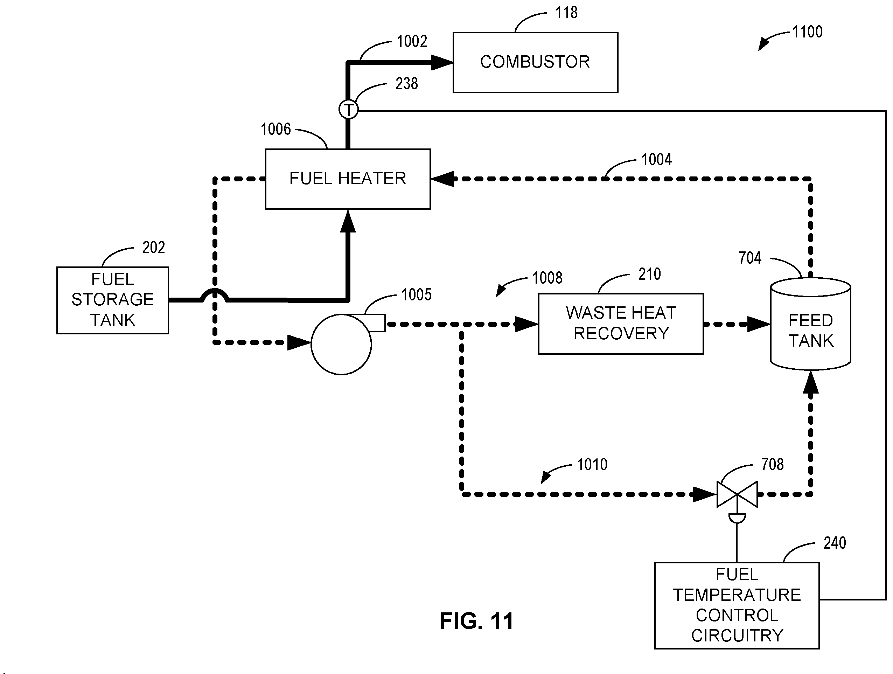

FIG. 11 illustrates another example fuel thermal control system 1100 including the same components as the fuel thermal control system 1000 of FIG. 10 and in which the sensor(s) 238 are coupled to the fuel flowline 1002 between the fuel heater 1006 and the combustor 118. As such, in the fuel thermal control system 1100 of FIG. 11, the sensor(s) 238 measure a temperature of the fuel input into the combustor 118.

In the fuel thermal control systems 1000, 1100 of FIGS. 10 and 11, the first valve 708 is coupled to the waste heat bypass section 1010. As such, a position of the first valve 708 controls a flow rate of the first portion of the heat exchange fluid that bypasses the waste heat recovery heat exchanger 210. Additionally, the position of the first valve 708 controls the ratio the first flow rate of the first portion of the heat exchange fluid to the second flow rate of the second portion of the heat exchange fluid. Thus, the position of the first valve 708 controls an amount of the heat exchange fluid in the feed tank 704 that is relatively hotter (e.g., as a result of passing through the waste heat recovery heat exchanger 210) versus relatively colder (e.g., as a result of bypassing the waste heat recovery heat exchanger 210) such that the first valve 708 controls a temperature of the heat exchange fluid delivered to the fuel heater 1006.

In the fuel thermal control systems 1000, 1100 of FIGS. 10 and 11, the fuel temperature control circuitry 240 controls a position of the first valve 708 to control the temperature of the heat exchange fluid delivered to the fuel heater 1006 and, in turn, a temperature of the fuel delivered to the combustor 118. Specifically, the fuel temperature control circuitry 240 controls the position of the first valve 708 based on a measurement(s) (e.g., a fuel temperature measurement, a heat exchange fluid temperature measurement) by the sensor(s) 238 and a target temperature at which the fuel is to be delivered to the combustor 118. In the fuel thermal control system 1000 of FIG. 10, the fuel temperature control circuitry 240 maps a first target temperature at which the fuel is to be delivered to the combustor 118 to a second target temperature at which the heat exchange fluid is to be delivered to the fuel heater 1006 to cause the fuel to obtain the first target temperature.

During some example operations associated with the fuel thermal control systems 1000, 1100 of FIGS. 10 and 11, when a target temperature of the heat exchange fluid is greater than the temperature of the heat exchange fluid measured by the sensor(s) 238, the fuel temperature control circuitry 240 can cause the first valve 708 to move to a further closed (e.g., a fully closed, a partially closed) position to increase a ratio of the heat exchange fluid that flows through the waste heat recovery heat exchanger 210 (e.g., the ratio of the second portion of the heat exchange fluid to the first portion of the heat exchange fluid). As a result, the fuel temperature control circuitry 240 increases a temperature of the heat exchange fluid in the feed tank 704 and, thus, increases a temperature of the heat exchange fluid delivered to the fuel heater 1006, which increases a temperature of the fuel delivered to the combustor 118. When a target temperature of the heat exchange fluid is less than the temperature of the heat exchange fluid measured by the sensor(s) 238, the fuel temperature control circuitry 240 can cause the first valve 708 to move to a further open (e.g., a partially open, a fully open) position to increase a ratio of the heat exchange fluid that bypasses the waste heat recovery heat exchanger 210 (e.g., a ratio of the first portion of the heat exchange fluid to the second portion of the heat exchange fluid). As a result, the fuel temperature control circuitry 240 reduces the temperature of the heat exchange fluid in the feed tank 704 and, thus, reduces the temperature of the heat exchange fluid delivered to the fuel heater 1006, which reduces the temperature of the fuel delivered to the combustor 118.

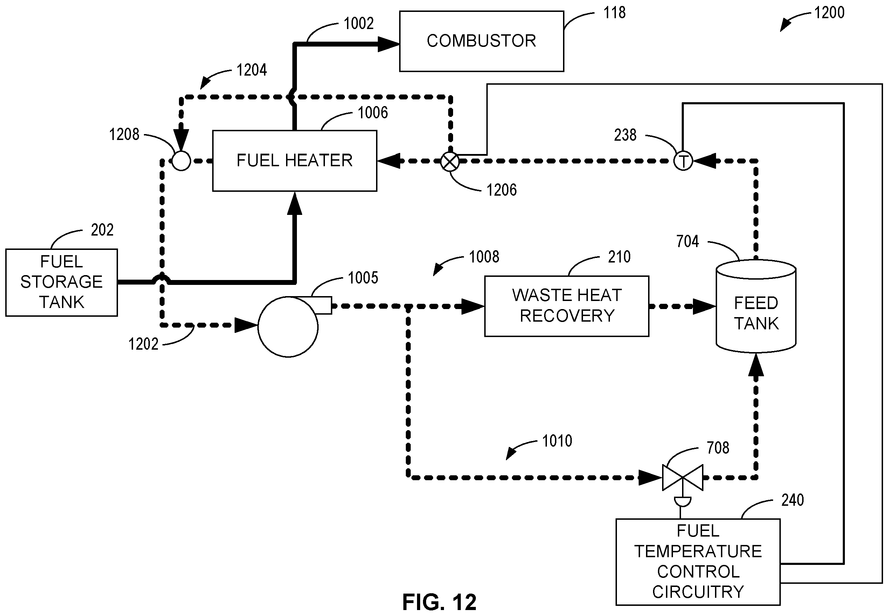

FIG. 12 is a schematic representation of another example fuel thermal control system 1200. In the illustrated example of FIG. 12, the fuel thermal control system 1200 includes the combustor 118, the fuel storage tank 202, the waste heat recovery heat exchanger 210, the fuel temperature control circuitry 240, the feed tank 704, the first valve 708, the fuel flowline 1002, the heat exchange fluid pump 1005, and the fuel heater 1006 of FIGS. 10 and 11. The fuel thermal control system 1200 of FIG. 12 includes a heat exchange fluid flowline 1202 including the main loop 1008, the waste heat bypass section 1010, and a fuel heater bypass section 1204. The heat exchange fluid flowline 1202 defines a closed loop for a heat exchange fluid (e.g., a closed-loop flow path). The fuel thermal control system 1200 of FIG. 12 also includes a fuel heater bypass valve 1206 and a heat exchange fluid mixer 1208.

In the illustrated example of FIG. 12, the fuel heater bypass valve 1206 is coupled to the heat exchange fluid flowline 1202 between the feed tank 704 and the fuel heater 1006. The heat exchange fluid mixer 1208 is coupled to the heat exchange fluid flowline 1202 between the fuel heater 1006 and the heat exchange fluid pump 1005. The fuel heater bypass section 1204 is coupled to the main loop 1008 at the fuel heater bypass valve 1206 and at the heat exchange fluid mixer 1208 to enable a portion of the heat exchange fluid to bypass the fuel heater 1006 during some operations. The heat exchange fluid mixer 1208 causes a relatively hotter portion of the heat exchange fluid that bypassed the fuel heater 1006 to mix with a relatively colder portion of the heat exchange fluid that passed through the fuel heater 1006 to obtain a uniform heat exchange fluid temperature downstream of the fuel heater 1006.

In the illustrated example of FIG. 12, by enabling a portion of the heat exchange fluid to bypass the fuel heater 1006, the fuel thermal control system 1200 reduces a flow rate of the heat exchange fluid flowing through the fuel heater 1006, which reduces thermal energy (e.g., heat) transferred from the heat exchange fluid to the fuel in the fuel heater 1006. Accordingly, when the temperature of the heat exchange fluid is greater than a target temperature, the fuel temperature control circuitry 240 can cause the fuel heater bypass valve 1206 to move to an open position (e.g., a partially open position, a fully open position) to reduce heat transferred to the fuel. In some examples, an adjustment to the position of the fuel heater bypass valve 1206 causes a fuel temperature reduction (e.g., a reduction in heat transferred to the fuel) to occur at a faster rate than an adjustment to the position of the first valve 708. As such, the fuel temperature control circuitry 240 can adjust a position of the fuel heater bypass valve 1206 for a short term fuel temperature adjustment and adjust a position of the first valve 708 for a relatively longer term fuel temperature adjustment.

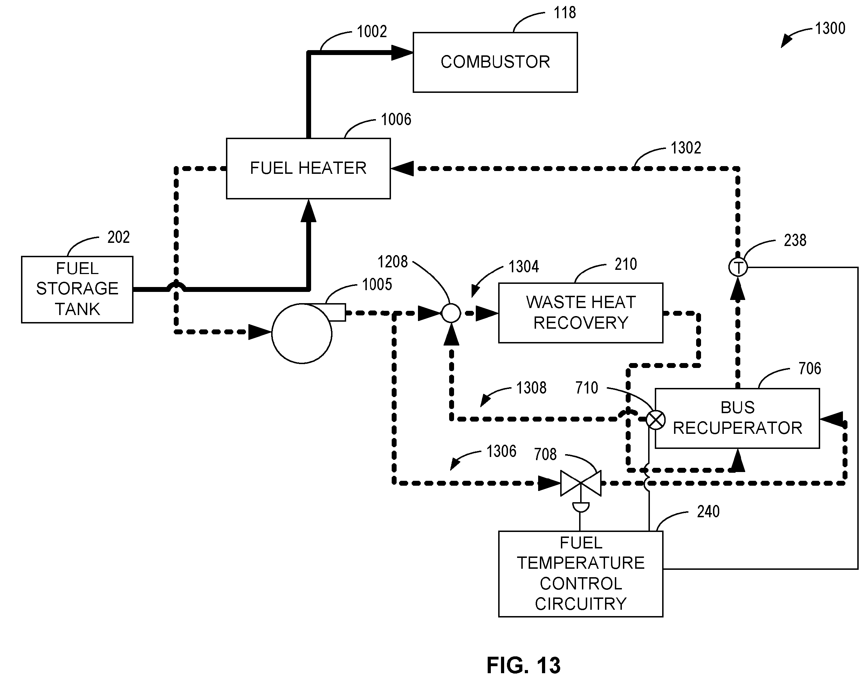

FIG. 13 is a schematic representation of another example fuel thermal control system 1300. In the illustrated example of FIG. 13, the fuel thermal control system 1300 includes the combustor 118, the fuel storage tank 202, the waste heat recovery heat exchanger 210, the fuel temperature control circuitry 240, the recuperator 706 (e.g., a thermal transfer bus recuperator), the first valve 708, the second valve 710, the fuel flowline 1002, the heat exchange fluid pump 1005, the fuel heater 1006, and the heat exchange fluid mixer 1208. The fuel thermal control system 1300 of FIG. 13 also includes a heat exchange fluid flowline 1302 including a main loop 1304, a waste heat recovery bypass section 1306, and a recuperator return section 1308. The heat exchange fluid flowline 1302 defines a closed loop for a heat exchange fluid (e.g., a closed-loop flow path). The main loop 1304 includes the waste heat recovery heat exchanger 210, the heat exchange fluid pump 1005, the fuel heater 1006, the recuperator 706, and the heat exchange fluid mixer 1208.

In the illustrated example of FIG. 13, the recuperator return section 1308 is coupled to the recuperator 706 and to the heat exchange fluid mixer 1208. As such, the recuperator return section 1308 carries a first, relatively hotter, portion of the heat exchange fluid from a first outlet of the recuperator 706 to the mixer 718. Accordingly, the first portion of the heat exchange fluid can mix with a second, relatively colder, portion of the heat exchange fluid flowing from the heat exchange fluid pump 1005 to the waste heat recovery heat exchanger 210. Specifically, the first portion of the heat exchange fluid can transfer heat to the second portion of the heat exchange fluid, which enables the waste heat recovery heat exchanger 210 to output the first and second portions of the heat exchange fluid at an increased temperature (e.g., compared to when the second portion of the heat exchange fluid does not mix with the first portion).

The second valve 710 is coupled to the recuperator return section 1308 and/or an outlet of the recuperator 706 proximate the recuperator return section 1308. The fuel temperature control circuitry 240 can control a position of the second valve 710 to control whether the first portion of the heat exchange fluid mixes with the second portion and/or control a ratio of the first portion to the second portion to obtain a target output temperature at the waste heat recovery heat exchanger 210 and/or the recuperator 706.

The waste heat recovery bypass section 1306 is coupled to (i) a portion of the main loop 1304 between the heat exchange fluid pump 1005 and the heat exchange fluid mixer 1208 and (ii) the recuperator 706. As such, the waste heat recovery bypass section 1306 enables a third, relatively colder, portion of the heat exchange fluid to bypass the waste heat recovery heat exchanger 210 and enter the recuperator 706 in which the relatively colder portion of the heat exchange fluid can receive some heat from the air in or from the compressor and/or from a fourth, relatively hotter, portion of the heat exchange fluid from the waste heat recovery heat exchanger 210 (e.g., that reached recuperator 706 via the main loop 1304) with which the first portion mixes in the recuperator 706. As such, an output temperature of the recuperator 706 to the fuel heater 1006 and/or to the heat exchange fluid mixer 1208 can be between a first temperature of the first portion of the heat exchange fluid and a second temperature of the second portion of the heat exchange fluid.

The first valve 708 is coupled to the waste heat recovery bypass section 1306 and/or to an inlet of the recuperator 706 proximate the waste heat recovery bypass section 1306. The fuel temperature control circuitry 240 can control a position of the first valve 708 to control a flow rate of the third portion of the heat exchange fluid and/or a ratio of the third portion of the heat exchange fluid to the fourth portion of the heat exchange fluid to obtain a target temperature output by the recuperator 706.

In some examples, when a temperature of the heat exchange fluid measured by the sensor(s) 238 is less than a target temperature, the fuel temperature control circuitry 240 causes the first valve 708 to be in (e.g., move to, remain in) a closed position (e.g., a fully closed position) and causes the second valve 710 to be in an open position (e.g., a partially open position, a fully open position) to increase the output temperature of the recuperator 706 and, in turn, a temperature of the heat exchange fluid that heats the fuel in the fuel heater 1006. In some examples, when the temperature of the heat exchange fluid measured by the sensor(s) 238 is greater than the target temperature, the fuel temperature control circuitry 240 causes the first valve 708 to be in an open position (e.g., a partially open position, a fully open position) and causes the second valve 710 to be in a closed position (e.g., a fully closed position) to reduce the output temperature of the recuperator 706 and, in turn, the temperature of the heat exchange fluid that heats the fuel in the fuel heater 1006.

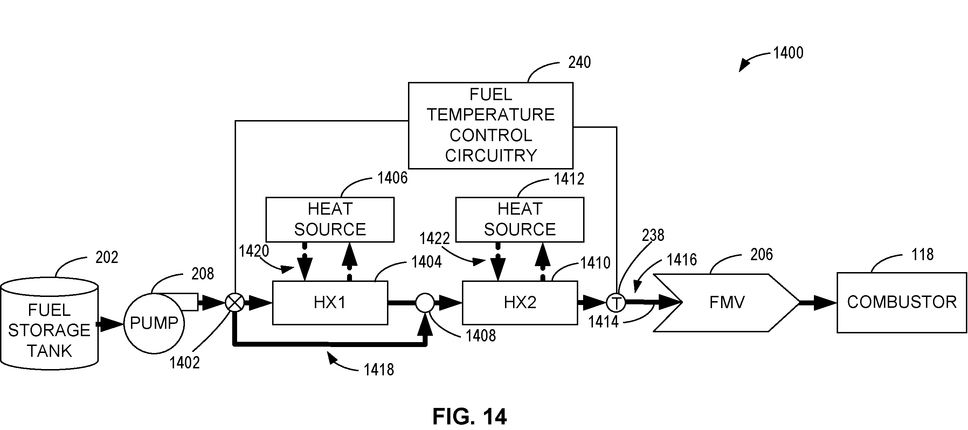

FIG. 14 is a schematic illustration of another example fuel thermal control system 1400. In the illustrated example of FIG. 14, the fuel thermal control system 1400 includes the combustor 118, the fuel storage tank 202, the fuel metering valves 206, the fuel pump 208, the sensor(s) 238, and the fuel temperature control circuitry 240. The fuel thermal control system 1400 also includes a bypass valve 1402, a first heat exchanger 1404, a first heat source 1406, a mixer 1408, a second heat exchanger 1410, and a second heat source 1412.

In the illustrated example of FIG. 14, the fuel thermal control system 1400 includes a fuel flowline 1414 including a main section 1416 (e.g., a trunk section) and a bypass section 1418 (e.g., a branch section). The fuel storage tank 202, the fuel pump 208, the bypass valve 1402, the first heat exchanger 1404, the mixer 1408, the second heat exchanger 1410, the sensor(s) 238, the fuel metering valves 206, and the combustor 118 are coupled to the main section 1416 of the fuel flowline 1414. The bypass section 1418 is coupled to the main section 1416 at the bypass valve 1402 and the mixer 1408. As such, the bypass section 1418 enables at least a portion of the fuel to bypass the first heat exchanger 1404 during certain operations.

In some examples, the fuel thermal control system 1400 includes a first secondary flowline 1420 and a second secondary flowline 1422. The first secondary flowline 1420 carries a fluid other than fuel between the first heat exchanger 1404 and the first heat source 1406. The second secondary flowline 1422 carries a fluid other than fuel between the second heat exchanger 1410 and the second heat source 1412. Specifically, the first secondary flowline 1420 and the second secondary flowline 1422 carry the fluid(s) from the first heat source 1406 and the second heat source 1412 to the first heat exchanger 1404 and the second heat exchanger 1410 at a relatively higher temperature such that the fluid(s) transfer heat to the fuel in the first heat exchanger 1404 and the second heat exchanger 1410. Further, the first secondary flowline 1420 and the second secondary flowline 1422 carry the fluid(s) from the first heat exchanger 1404 and the second heat exchanger 1410 to the first heat source 1406 and the second heat source 1412 at a relatively lower temperature such that the fluid(s) absorb heat from another fluid and/or component, such as a fluid or component associated with the gas turbine engine 100 of FIG. 1, as discussed in association with FIGS. 3 and 4. In some examples, the first heat exchanger 1404 and/or the second heat exchanger 1410 include and/or implement the first heat source 1406 and/or the second heat source 1412 (e.g., when the first heat exchanger 1404 and/or the second heat exchanger 1410 are electronic trim heaters) such that the fuel thermal control system 1400 does not include the first secondary flowline 1420 and/or the second secondary flowline 1422.

In the illustrated example of FIG. 14, the fuel temperature control circuitry 240 controls a position of the bypass valve 1402 to control a temperature of the fuel. For example, the fuel temperature control circuitry 240 can control the position of the bypass valve 1402 based on a difference between a target temperature for the fuel and a temperature of the fuel measured by the sensor(s) 238. When the target temperature is less than the measured temperature, the fuel temperature control circuitry 240 can cause the bypass valve 1402 to move to a further open position (e.g., a partially open position, a fully open position) to cause an increased portion of the fuel to bypass the first heat exchanger 1404 and, thus, not receive heat in the first heat exchanger 1404. When the target temperature is greater than the measured temperature, the fuel temperature control circuitry 240 can cause the bypass valve 1402 to move to a further closed position (e.g., a partially closed position, a fully closed position) to prevent the fuel from bypassing the first heat exchanger 1404 and, thus, cause an increased portion of the fuel to receive heat in the first heat exchanger 1404.

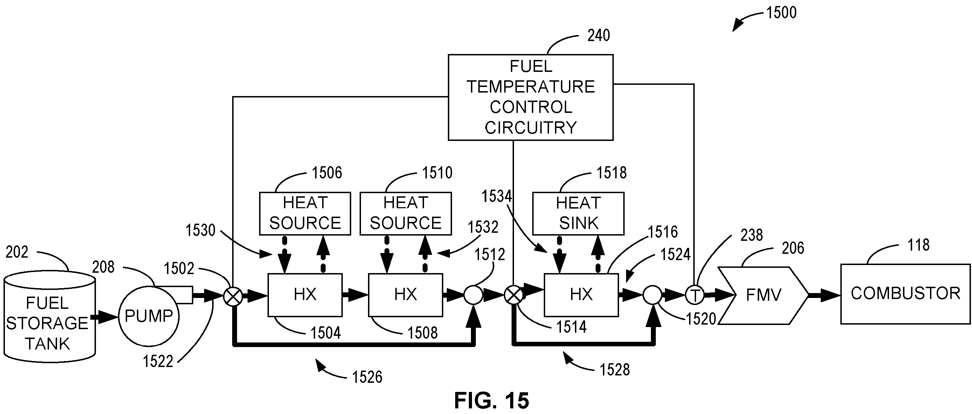

FIG. 15 is a schematic illustration of another example fuel thermal control system 1500. In the illustrated example of FIG. 15, the fuel thermal control system 1500 includes the combustor 118, the fuel storage tank 202, the fuel metering valves 206, the fuel pump 208, the sensor(s) 238, and the fuel temperature control circuitry 240. The fuel thermal control system 1500 also includes a first bypass valve 1502, a first heat exchanger 1504, a first heat source 1506, a second heat exchanger 1508, a second heat source 1510, a first mixer 1512, a second bypass valve 1514, a third heat exchanger 1516, a heat sink 1518, and a second mixer 1520.

In the illustrated example of FIG. 15, the fuel thermal control system 1500 includes a fuel flowline 1522 including a main section 1524, a first bypass section 1526, and a second bypass section 1528. The fuel storage tank 202, the fuel pump 208, the first bypass valve 1502, the first heat exchanger 1504, the second heat exchanger 1508, the first mixer 1512, the second bypass valve 1514, the third heat exchanger 1516, the second mixer 1520, the sensor(s) 238, the fuel metering valves 206, and the combustor 118 are coupled to the main section 1524 of the fuel flowline 1522. The first bypass section 1526 is coupled to the main section 1524 at the first bypass valve 1502 and the first mixer 1512. As such, the first bypass section 1526 enables at least a portion of the fuel to bypass the first heat exchanger 1504 and the second heat exchanger 1508. The second bypass section 1528 is coupled to the main section 1524 at the second bypass valve 1514 and the second mixer 1520. As such, the second bypass section 1528 enables at least a portion of the fuel to bypass the third heat exchanger 1516.

In some examples, the fuel thermal control system 1500 includes a first secondary flowline 1530, a second secondary flowline 1532, and a third secondary flowline 1534. The first secondary flowline 1530 carries a fluid other than fuel between the first heat exchanger 1504 and the first heat source 1506. The second secondary flowline 1532 carries a fluid other than fuel between the second heat exchanger 1508 and the second heat source 1510. Specifically, the first secondary flowline 1530 and the second secondary flowline 1532 carry the fluid(s) from the first heat source 1506 and the second heat source 1510 to the first heat exchanger 1504 and the second heat exchanger 1508 at a relatively higher temperature such that the fluid(s) transfer heat to the fuel in the first heat exchanger 1504 and the second heat exchanger 1508. Further, the first secondary flowline 1530 and the second secondary flowline 1532 carry the fluid(s) from the first heat exchanger 1504 and the second heat exchanger 1508 to the first heat source 1506 and the second heat source 1510 at a relatively lower temperature. As a result, the fluid(s) absorb heat from another fluid and/or component associated with the first heat source 1506 and the second heat source 1510, such as a fluid or component associated with the gas turbine engine 100 of FIG. 1, as discussed in association with FIGS. 3 and 4. In some examples, the first heat exchanger 1504 and/or the second heat exchanger 1508 include and/or implement the first heat source 1506 and/or the second heat source 1510 (e.g., when the first heat exchanger 1504 and/or the second heat exchanger 1508 are electronic trim heaters) such that the fuel thermal control system 1500 does not include the first secondary flowline 1530 and/or the second secondary flowline 1532.

In the illustrated example of FIG. 15, the third secondary flowline 1534 carries a fluid other than fuel between the third heat exchanger 1516 and the heat sink 1518. Specifically, the third secondary flowline carries the fluid from the heat sink 1518 to the third heat exchanger 1516 at a relatively lower temperature than the fuel in the third heat exchanger 1516 such that the fluid absorbs heat from the fuel. Further, the third secondary flowline 1534 carries the fluid from the third heat exchanger 1516 to the heat sink 1518 to enable the heat absorbed by the fluid to transfer to another fluid and/or component in advance of the fluid returning to the third heat exchanger 1516.

In the illustrated example of FIG. 15, the fuel temperature control circuitry 240 controls a position of the first bypass valve 1502 and the second bypass valve 1514 to control a temperature of the fuel. For example, the fuel temperature control circuitry 240 can control the position of the first bypass valve 1502 and the second bypass valve 1514 based on a difference between a target temperature for the fuel and a temperature of the fuel measured by the sensor(s) 238. When the target temperature is less than the measured temperature, the fuel temperature control circuitry 240 can cause the first bypass valve 1502 to move to a position that (i) reduces a flow rate and/or portion of the fuel that flows through the first heat exchanger 1504 and the second heat exchanger 1508 and (ii) increases a flow rate and/or portion of the fuel that bypasses the first heat exchanger 1504 and the second heat exchanger 1508 to reduce an amount of heat absorbed by the fuel. Additionally or alternatively, when the target temperature is less than the measured temperature, the fuel temperature control circuitry 240 can cause the second bypass valve 1514 to move to a position that (i) increases a flow rate and/or portion of the fuel that flows through the third heat exchanger 1516 and (ii) reduces a flow rate and/or portion of the fuel that bypasses the third heat exchanger 1516 to increase an amount of heat absorbed from the fuel.

Further, when the target temperature is greater than the measured temperature, the fuel temperature control circuitry 240 can cause the first bypass valve to move to a position that (i) increases a flow rate and/or portion of the fuel that flows through the first heat exchanger 1504 and the second heat exchanger 1508 and (ii) reduces a flow rate and/or portion of the fuel that bypasses the first heat exchanger 1504 and the second heat exchanger 1508 to increase an amount of heat absorbed by the fuel. Additionally or alternatively, when the target temperature is greater than the measured temperature, the fuel temperature control circuitry 240 can cause the second bypass valve 1514 to move to a position that (i) reduces a flow rate and/or portion of the fuel that flows through the third heat exchanger 1516 and (ii) increases a flow rate and/or portion of the fuel that bypasses the third heat exchanger 1516 to reduce an amount of heat absorbed from the fuel.

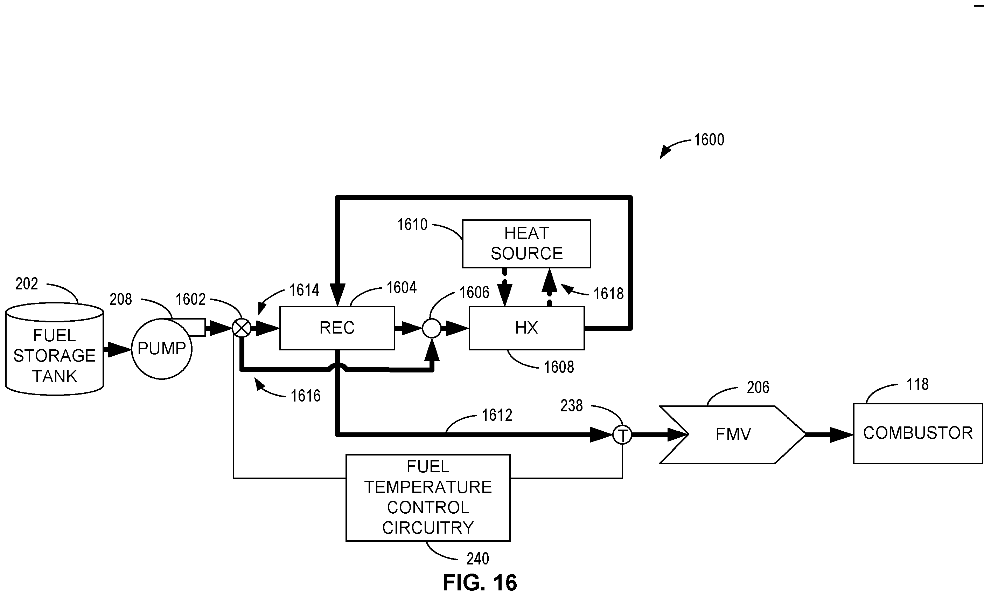

FIG. 16 is a schematic illustration of another example fuel thermal control system 1600. In the illustrated example of FIG. 16, the fuel thermal control system 1600 includes the combustor 118, the fuel storage tank 202, the fuel metering valves 206, the fuel pump 208, the sensor(s) 238, and the fuel temperature control circuitry 240. The fuel thermal control system 1600 also includes a bypass valve 1602, a recuperator 1604, a mixer 1606, a heat exchanger 1608, a heat source 1610, and a fuel flowline 1612 including a main section 1614 and a bypass section 1616. In some examples, the fuel thermal control system 1600 includes a secondary fluid flowline 1618 to carry a fluid other than fuel (e.g., nitrogen, carbon dioxide (e.g., supercritical carbon dioxide), an inert gas, etc.) to and from the heat exchanger 1608 for a heat transfer with the fuel. In some examples, the heat exchanger 1608 includes and/or implements the heat source 1610, in which case the fuel thermal control system 1600 does not include the secondary fluid flowline 1618.

In the illustrated example of FIG. 16, the fuel storage tank 202, the fuel pump 208, the bypass valve 1602, the recuperator 1604, the mixer 1606, the heat exchanger 1608, the sensor(s) 238, the fuel metering valves 206, and the combustor 118 are coupled to the main section 1614 of the fuel flowline 1612. The bypass section 1616 is coupled to the main section 1614 at the bypass valve 1602 and the mixer 1606 to enable fuel to bypass at least a portion of the recuperator 1604 upstream of the heat exchanger 1608 during some operations. In some examples, the recuperator 1604 includes a first section that carries the fuel towards the mixer 1606 and a second section separate from the first section that carries the fuel from the heat exchanger 1608 toward the fuel metering valves 206. In such examples, the recuperator 1604 causes a first portion of the fuel in the first section (e.g., a relatively colder portion of the fuel) to exchange thermal energy with a second portion of the fuel in the second section (e.g., a relatively hotter portion of the fuel). For example, when the bypass valve 1602 prevents fuel flow through the bypass section 1616, the recuperator 1604 causes the colder, first portion of the fuel to cool the hotter, second portion, which received heat from the heat exchanger 1608, to reduce a temperature of the fuel being delivered to the fuel metering valves 206. Further, when the bypass valve 1602 enables the fuel flow through the bypass section 1616, the colder, first portion of the fuel does not enter the recuperator 1604. As a result, the hotter, second portion of the fuel is not cooled in the recuperator 1604 after passing through the heat exchanger 1608.

In the illustrated example of FIG. 16, the fuel temperature control circuitry 240 controls a position of the bypass valve 1602 to control a temperature of the fuel that is injected into the combustor 118. Specifically, the fuel temperature control circuitry 240 can control the position of the bypass valve 1602 based on a difference between a target temperature for the fuel and a temperature of the fuel measured by the sensor(s) 238.

In some examples, when (i) the recuperator 1604 includes the first section and the second section separately and (ii) the target temperature is greater than the measured temperature, the fuel temperature control circuitry 240 can cause the bypass valve 1602 to move to a position that increases a flow rate and/or portion of the fuel that bypasses the first section of the recuperator 1604. As a result, reduced heat transfer occurs downstream of the heat exchanger 1608 to enable a relatively hotter temperature of the fuel that exits the heat exchanger 1608 to be maintained. In some examples, when (i) the recuperator 1604 includes the first section and the second section separately and (ii) the target temperature is less than the measured temperature, the fuel temperature control circuitry 240 can cause the bypass valve 1602 to move to a position that reduces a flow rate and/or portion of the fuel that bypasses the first section of the recuperator 1604. As a result, some of the heat absorbed in the heat exchanger 1608 can be dissipated in the recuperator 1604 before the fuel is carried to the fuel metering valves 206.

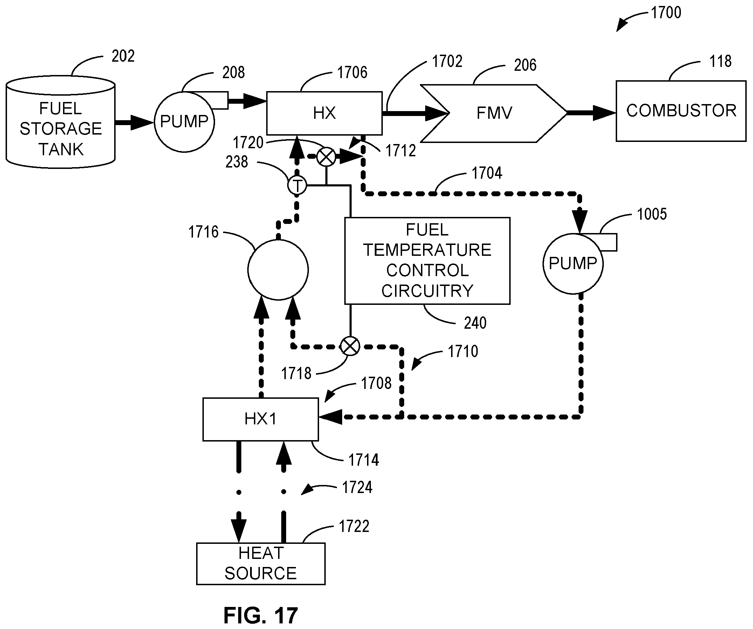

FIG. 17 is a schematic illustration of another example fuel thermal control system 1700. In the illustrated example of FIG. 17, the fuel thermal control system 1700 includes a fuel flowline 1702 and a heat exchange fluid flowline 1704 that are coupled to a first heat exchanger 1706 (e.g., a fuel heat exchanger). The heat exchange fluid flowline 1704 defines a closed loop for a heat exchange fluid (e.g., a closed-loop flow path). A first end of the fuel flowline 1702 is coupled to the fuel storage tank 202, and a second end of the fuel flowline 1702 is coupled to the combustor 118. As such, the fuel flowline 1702 carries fuel from the fuel storage tank 202 to the first heat exchanger 1706 in which the fuel receives heat from a heat exchange fluid prior to being injected into the combustor 118. The fuel thermal control system 1700 also includes the fuel pump 208 and the fuel metering valves 206 coupled to the fuel flowline 1702.

In the illustrated example of FIG. 17, the heat exchange fluid flowline 1704 includes a main loop 1708, a first bypass section 1710, and a second bypass section 1712. The fuel thermal control system 1700 includes the heat exchange fluid pump 1005, a second heat exchanger 1714, a mixer 1716, the sensor(s) 238, and the first heat exchanger 1706 coupled to the main loop 1708. The fuel thermal control system 1700 includes a first bypass valve 1718 coupled to the first bypass section 1710. Specifically, the first bypass section 1710 includes (i) a first end coupled to the main loop 1708 between the heat exchange fluid pump 1005 and the second heat exchanger 1714 and (ii) a second end coupled to the mixer 1716 with the first bypass valve 1718 positioned between the first end and the second end. As a result, the first bypass valve 1718 enables a portion of the heat exchange fluid to bypass the second heat exchanger 1714 and, in turn, reduce a temperature of the heat exchange fluid in the mixer 1716. In some examples the first bypass valve 1718 is proximate the first end of the first bypass section 1710.

In the illustrated example of FIG. 17, the fuel thermal control system 1700 includes a second bypass valve 1720 coupled to the second bypass section 1712. Specifically, the second bypass section 1712 includes (i) a first end coupled to the main loop 1708 between the mixer 1716 and the first heat exchanger 1706 and (ii) a second end coupled to the main loop 1708 between the first heat exchanger 1706 and the heat exchange fluid pump 1005 with the second bypass valve 1720 positioned between the first end and the second end. As a result, the second bypass valve 1720 enables a portion of the heat exchange fluid to bypass the first heat exchanger 1706, which can reduce an amount of heat that the heat exchange fluid transfers to the fuel in the first heat exchanger 1706. In some examples, the second bypass valve 1720 is proximate the first end of the second bypass section 1712.

In some examples, the fuel thermal control system 1700 includes a heat source 1722 and a secondary heat exchange fluid flowline 1724 to carry another fluid to and from the second heat exchanger 1714 for a thermal energy exchange with the heat exchange fluid. In some examples, the second heat exchanger 1714 includes and/or implements the heat source 1722, in which case the fuel thermal control system 1700 does not include the secondary heat exchange fluid flowline 1724.

In the illustrated example of FIG. 17, the fuel thermal control system 1700 includes the fuel temperature control circuitry 240 in communication with the sensor(s) 238, the first bypass valve 1718, and the second bypass valve 1720. The fuel temperature control circuitry 240 can control a position of the first bypass valve 1718 and a position of the second bypass valve 1720 to control a temperature of the fuel injected into the combustor 118. For example, the fuel temperature control circuitry 240 can control the position of the first bypass valve 1718 and the second bypass valve 1720 based on a difference between a target temperature for the fuel and a temperature of the fuel measured by the sensor(s) 238.

In some examples, when the target temperature is less than the measured temperature, the fuel temperature control circuitry 240 causes the first bypass valve 1718 to move to a position that (i) reduces a flow rate and/or portion of the heat exchange fluid that flows through the second heat exchanger 1714 and (ii) increases a flow rate and/or portion of the heat exchange fluid that flows through the first bypass section 1710 to reduce an amount of heat absorbed by the heat exchange fluid via the second heat exchanger 1714. Additionally or alternatively, when the target temperature is less than the measured temperature, the fuel temperature control circuitry 240 can cause the second bypass valve 1720 to move to a position that (i) reduces a flow rate and/or portion of the heat exchange fluid that flows through the first heat exchanger 1706 and (ii) increases a flow rate and/or portion of the heat exchange fluid that flows through the second bypass section 1712 to reduce an amount of heat absorbed by the fuel via the first heat exchanger 1706. In some examples, when the target temperature is greater than the measured temperature, the fuel temperature control circuitry 240 causes the first bypass valve 1718 to move to a position that (i) increases a flow rate and/or portion of the heat exchange fluid that flows through the second heat exchanger 1714 and (ii) reduces a flow rate and/or portion of the heat exchange fluid that flows through the first bypass section 1710 to increase an amount of heat absorbed by the heat exchange fluid via the second heat exchanger 1714. Additionally or alternatively, when the target temperature is greater than the measured temperature, the fuel temperature control circuitry 240 can cause the second bypass valve 1720 to move to a position that (i) increases a flow rate and/or portion of the heat exchange fluid that flows through the first heat exchanger 1706 and (ii) reduces a flow rate and/or portion of the heat exchange fluid that flows through the second bypass section 1712 to increase an amount of heat absorbed by the fuel via the first heat exchanger 1706. In some examples, the fuel temperature control circuitry 240 (i) adjusts the second bypass valve 1720 to implement fuel temperature adjustments at a relatively faster rate for a relatively shorter duration and (ii) adjusts the first bypass valve 1718 to implement fuel temperature adjustments that are to be maintained for a relatively longer period.

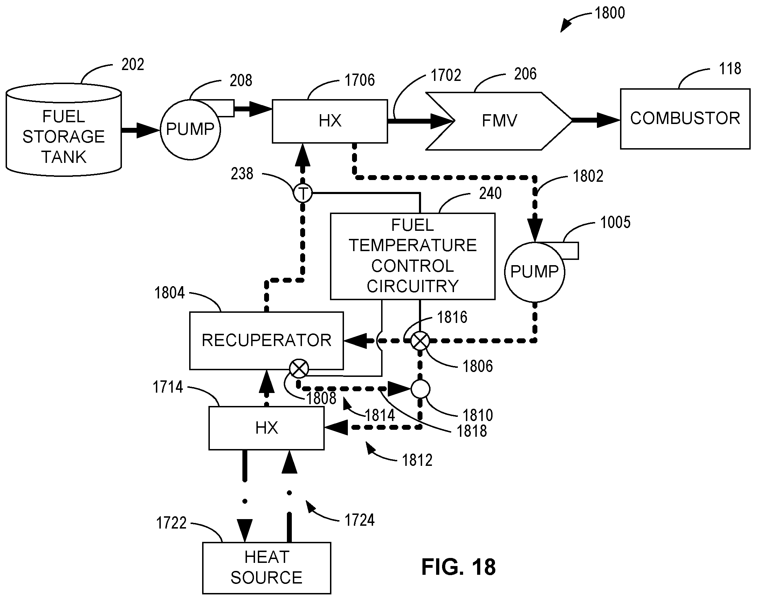

FIG. 18 is a schematic illustration of another example fuel thermal control system 1800. In the illustrated example of FIG. 18, the fuel thermal control system 1800 includes the fuel flowline 1702 and a heat exchange fluid flowline 1802 that are coupled to the first heat exchanger 1706. The heat exchange fluid flowline 1802 defines a closed loop for a heat exchange fluid (e.g., a closed-loop flow path). The fuel thermal control system 1800 also includes the fuel metering valves 206, the fuel pump 208, the sensor(s) 238, the heat exchange fluid pump 1005, the second heat exchanger 1714, the heat source 1722, and the secondary heat exchange fluid flowline 1724. In the illustrated example of FIG. 18, the fuel thermal control system 1800 includes a recuperator 1804 and a recuperator input valve 1806. In some examples, the fuel thermal control system 1800 includes a recuperator output valve 1808 and a mixer 1810.

In the illustrated example of FIG. 18, the heat exchange fluid flowline 1802 includes a main loop 1812 and a recuperator loop 1814. The first heat exchanger 1706, the heat exchange fluid pump 1005, the recuperator input valve 1806, the mixer 1810, the second heat exchanger 1714, a first inlet of the recuperator 1804, a first outlet of the recuperator 1804, and the sensor(s) 238 are coupled to the main loop 1812. The recuperator loop 1814 includes (i) a first portion 1816 that couples to the main loop 1812 at the recuperator input valve 1806 and to a second inlet of the recuperator 1804 and (ii) a second portion 1818 that couples to a second outlet of the recuperator 1804 and to the main loop 1812 at the mixer 1810.

In some examples, the recuperator 1804 includes a first section that fluidly couples directly to the recuperator loop 1814 and a second section that fluidly couples directly to the main loop 1812. For example, the recuperator 1804 can include two non-intersecting flowlines. In some examples, the recuperator 1804 includes a mixer that mixes a first, relatively colder, portion of the heat exchange fluid received from the recuperator loop 1814 with a second, relatively hotter, portion of the heat exchange fluid received directly from the main loop 1812. In some such examples, a mixture of the first portion and the second portion of the heat exchange fluid can exit the recuperator 1804 via (i) the first outlet of the recuperator 1804 (e.g., the main loop 1812) and flow towards the first heat exchanger 1706 and/or (ii) the second outlet of the recuperator 1804 (e.g., the second portion 1818 of the recuperator loop 1814).

In the illustrated example of FIG. 18, the fuel temperature control circuitry 240 controls a position of the recuperator input valve 1806 and/or the recuperator output valve 1808 to control a temperature of the fuel injected into the combustor 118. For example, the fuel temperature control circuitry 240 can control the position of the recuperator input valve 1806 and/or the recuperator output valve 1808 based on a difference between a target temperature for the fuel and a temperature of the fuel measured by the sensor(s) 238.

In some examples, when (i) the recuperator 1804 includes the first section and the second section separately and (ii) the target temperature is greater than the measured temperature, the fuel temperature control circuitry 240 causes the recuperator input valve 1806 to move to a position that increases a flow rate of the heat exchange fluid through the recuperator loop 1814. As a result, the heat exchange fluid enters the second heat exchanger 1714 at a relatively higher temperature (e.g., than would otherwise result when less of the heat exchange fluid flows through the second heat exchanger 1714), which enables the heat exchange fluid to obtain a relatively higher temperature (e.g., than would otherwise result when less of the heat exchange fluid flows through the second heat exchanger 1714) after flowing through the second heat exchanger 1714 and the second section of the recuperator 1804. In some examples, when (i) the recuperator 1804 includes the first section and the second section separately and (ii) the target temperature is less than the measured temperature, the fuel temperature control circuitry 240 causes the recuperator input valve 1806 to move to a position that reduces a flow rate of the heat exchange fluid through the recuperator loop 1814. As a result, the heat exchange fluid enters the second heat exchanger 1714 at a relatively lower temperature (e.g., than would otherwise result when more of the heat exchange fluid flows through the second heat exchanger 1714), which enables the heat exchange fluid to obtain a relatively lower temperature (e.g., than would otherwise result when more of the heat exchange fluid flows through the second heat exchanger 1714) after flowing through the second heat exchanger 1714 and the second section of the recuperator 1804.

In some examples, when (i) the recuperator 1804 enables mixing of the first, relatively colder, portion of the heat exchange fluid received from the recuperator loop 1814 with the second, relatively hotter, portion of the heat exchange fluid received directly from the main loop 1812 and (ii) the target temperature is greater than the measured temperature, the fuel temperature control circuitry 240 (i) causes the recuperator output valve 1808 to move to a position that increases a flow rate and/or portion of the heat exchange fluid that exits the recuperator 1804 via the second portion 1818 of the recuperator loop 1814 and/or (ii) causes the recuperator input valve 1806 to move to a position that reduces a flow rate and/or portion of the heat exchange fluid that enters the recuperator 1804 via the first portion 1816 of the recuperator loop 1814. In some examples, when (i) the recuperator 1804 enables mixing of the first, relatively colder, portion of the heat exchange fluid with the second, relatively hotter, portion of the heat exchange fluid and (ii) the target temperature is less than the measured temperature, the fuel temperature control circuitry 240 (i) causes the recuperator input valve 1806 to move to a position that increases a flow rate and/or portion of the heat exchange fluid that enters the recuperator 1804 via the first portion 1816 of the recuperator loop 1814 and/or (ii) causes the recuperator output valve 1808 to move to a position that reduces a flow rate and/or portion of the heat exchange fluid that exits the recuperator 1804 via the second portion 1818 of the recuperator loop 1814.

FIG. 19 illustrates a control logic flow diagram 1900 associated with the fuel temperature control circuitry 240. In the illustrated example of FIG. 19, utilization of the control logic flow diagram 1900 by the fuel temperature control circuitry 240 is discussed in conjunction with at least the fuel thermal control system 200 of FIG. 2, the fuel thermal control system 500 of FIG. 5A, the fuel thermal control system 550 of FIG. 5B, and/or the fuel thermal control system 600 of FIG. 6. However, it should be understood that utilization of the control logic flow diagram 1900 by the fuel temperature control circuitry 240 can occur in association with other fuel thermal control systems.

In some examples, the fuel temperature control circuitry 240 utilizes (e.g., considers in association with a valve position determination) one temperature measurement by the sensor(s) 238 in association with the control logic flow diagram 1900. For example, the temperature measurement can be associated with an input temperature of the fuel (e.g., from a temperature sensor of the sensor(s) 238 positioned proximate an outlet of the fuel pump 208) or an output temperature of the fuel (e.g., from a temperature sensor of the sensor(s) 238 positioned proximate an inlet of the fuel metering valves 206). In some examples, the fuel temperature control circuitry 240 utilizes more than one temperature measurement by the sensor(s) 238 in association with the control logic flow diagram 1900. For example, the temperature measurements can include the input temperature, the output temperature, a temperature associated with the waste heat recovery heat exchanger 210, a temperature associated with the heat source 218, and/or a temperature associated with the heat sink 220.

In some examples, the fuel temperature control circuitry 240 utilizes pressure measurements from the sensor(s) 238 in association with the control logic flow diagram 1900. For example, the pressure measurements can include an input pressure (e.g., from a pressure sensor of the sensor(s) 238 proximate an outlet of the fuel pump 208) and pressures in branch sections (e.g., from pressure sensors of the sensor(s) 238 coupled to the first branch section 207 (FIGS. 2, 5, and 6), the second branch section 209 (FIG. 2), the second branch section 504 (FIGS. 5A-5B), and/or the second branch section 604 (FIG. 6)) extending from the trunk section 205 (FIGS. 2, 5, and 6).

In the illustrated example of FIG. 19, the fuel temperature control circuitry 240 utilizes the temperature and/or pressure measurement(s) from the sensor(s) 238 to define boundary conditions 1902. For example, the boundary conditions 1902 can include a fuel temperature going into the combustor and/or a pressure(s) around the valves 222, 224.

In the illustrated example of FIG. 19, the fuel temperature control circuitry 240 utilizes a first embedded model(s) 1904 that identifies one or more temperatures and/or one or more pressures measured by the sensor(s) 238 and calculates one or more temperatures and/or one or more pressures associated with different areas in the fuel thermal control systems 200, 500, 600 for control of the gas turbine engine 100 of FIG. 1. In the illustrated example of FIG. 19, the first embedded model(s) 1904 can calculate the temperature(s) and/or pressure(s) based on a position and/or movement of heat exchanger valves (e.g., the first valve 222, the second valve 224, the third valve 230, the fourth valve 234) identified by valve feedback 1906. For example, the valve feedback 1906 can be communicatively coupled to actuators and/or sensors (e.g., position sensors) associated with the heat exchanger valves.

In the illustrated example of FIG. 19, the fuel temperature control circuitry 240 utilizes a second embedded model(s) 1908 to calculate flow rates associated with trim heat exchangers (e.g., first trim heat exchanger 212, the second trim heat exchanger 214). The second embedded model(s) 1908 can receive inputs from the boundary conditions 1902, the first embedded model(s) 1904, and the valve feedback 1906. The second embedded model(s) 1908 can calculate (i) a first flow rate(s) of the fuel flowing into the trim heat exchangers and (ii) a second flow rate(s) of the fuel bypassing the trim heat exchangers (e.g., remaining in the trunk section 205).

In the illustrated example of FIG. 19, the fuel temperature control circuitry 240 identifies an engine demand 1910. The engine demand 1910 can include a magnitude of transient (e.g., a deviation from a steady-state command, an acceleration, a deceleration) being sent to the gas turbine engine 100. The magnitude of the transient can vary in a range between idle to max power or between minimum and maximum system limits. For example, the magnitude of the transient can correspond to an increase or a reduction in a target output (e.g., a target power, a target thrust, a target horsepower extraction, etc.) of the gas turbine engine 100. In some examples, the engine demand 1910 receives or identifies a current fuel flow rate via the fuel metering valves 206 and/or a mass flow rate sensor(s) of the sensor(s) 238. In some such examples, the engine demand 1910 determines an adjustment to the current fuel flow rate based on the magnitude of the transient.

In the illustrated example of FIG. 19, the fuel temperature control circuitry 240 utilizes a predictive model 1912 that receives an input from the engine demand 1910 and calculates future states. For example, the predictive model 1912 can identify a target temperature range associated with the engine demand 1910. The target temperature range can include a target temperature for combustion (e.g., X) plus or minus a deviation range (e.g., Y), such as 50 degrees Fahrenheit (°F). In some examples, the predictive model 1912 manages fuel flow (e.g., via valve position adjustments) transiently to ensure the target temperature range stays within predefined boundary conditions (e.g., predefined limits) associated with the fuel thermal control systems 200, 500, 600 and/or the gas turbine engine 100.

In the illustrated example of FIG. 19, the fuel temperature control circuitry 240 utilizes a third embedded model(s) 1914 that receives (i) the measured temperature(s) and/or pressure(s) from the boundary conditions 1902, (ii) the calculated temperature(s) and/or pressure(s) from the first embedded model(s) 1904, (iii) the flow rate of the fuel into and/or bypassing the trim heat exchangers from the second embedded model(s) 1908, and (iv) the target temperature range and/or the valve position adjustments from the predictive model 1912. The third embedded model(s) 1914 can determine heat exchange capabilities associated with the trim heat exchangers and the waste heat recovery heat exchanger 210 based on the fuel flow rates in the different areas of the fuel thermal control systems 200, 500, 600, the temperatures in the different areas of the fuel thermal control systems 200, 500, 600, properties associated with the heat exchangers (e.g., a predetermined heat transfer relationship associated with the heat exchangers), and/or conditions associated with the gas turbine engine 100. As engine conditions change throughout operations, the third embedded model(s) 1914 determines how the engine condition changes affect the effectiveness of the heat exchangers. For example, the third embedded model(s) 1914 can determine the heat exchange capabilities associated with the trim heat exchangers and the waste heat recovery heat exchanger 210 based on a change in power level, bleed levels, horsepower extraction, and/or other conditions associated with the operation of the gas turbine engine 100. The first embedded model(s) 1904, the second embedded model(s) 1908, and the third embedded model(s) 1914 can be physics-based models. Additionally, first embedded model(s) 1904, the second embedded model(s) 1908, and the third embedded model(s) can be calibrated to determine outputs based on particular heat exchangers in the system (e.g., the fuel thermal control system 200 of FIG. 2, the fuel thermal control system 500 of FIG. 5A, the fuel thermal control system 550 of FIG. 5B, and/or the fuel thermal control system 600 of FIG. 6) in which the fuel temperature control circuitry 240 is being utilized.

In the illustrated example of FIG. 19, the fuel temperature control circuitry 240 utilizes a closed loop controller 1916 that receives the heat exchange capabilities and the target fuel temperature from the third embedded model(s) 1914 and the boundary conditions 1902. The closed loop controller 1916 determines and outputs valve demands 1918 for the valves in the fuel thermal control systems 200, 500, 600 to obtain the target fuel temperature given the current conditions and the heat exchange capabilities in the system. For examples, the valve demands 1918 can include positional adjustments and/or movements to be implemented by the valves to obtain the target fuel temperature. The valve feedback 1906 can receive the valve demands 1918 as the fuel temperature control circuitry 240 continues to operate to obtain the target fuel temperature throughout engine operations.

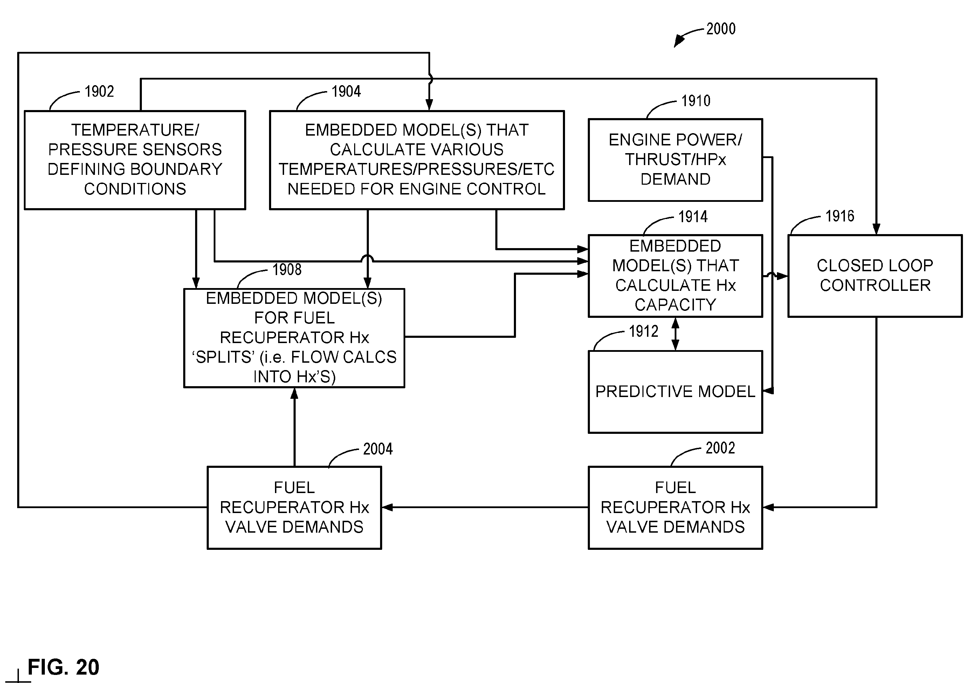

FIG. 20 illustrates another control logic flow diagram 2000 associated with the fuel temperature control circuitry 240. In the illustrated example of FIG. 20, utilization of the control logic flow diagram 2000 by the fuel temperature control circuitry 240 is discussed in connection with the fuel thermal control system 700 of FIG. 7 and the fuel thermal control system 900 of FIG. 9. However, it should be understood that utilization of the control logic flow diagram 2000 by the fuel temperature control circuitry 240 can occur in association with other fuel thermal control systems. The control logic flow diagram 2000 of FIG. 20 is similar to the control logic flow diagram 1900 of FIG. 19 as the control logic flow diagram 2000 of FIG. 20 includes the boundary conditions 1902, the first embedded model(s) 1904, the second embedded model(s) 1908, the engine demand 1910, the predictive model 1912, the third embedded model(s) 1914, and the closed loop controller 1916. In the illustrated example of FIG. 20, valve demands 2002 from the closed loop controller 1916 are associated with one or more fuel recuperator valve(s) (e.g., the first valve 708 of FIGS. 7 and 9, the second valve 710, the third valve 712) and/or a feed tank valve (e.g., the fourth valve 714) instead of the trim heat exchanger valves and/or the waste heat recovery bypass valves associated with the valve demands 1918 of FIG. 19. Further, the valve demands 2002 are similarly accessed by valve feedback 2004 as the fuel temperature control circuitry 240 continues to operate to obtain the target fuel temperature throughout engine operations.

While an example manner of implementing the fuel temperature control circuitry 240 of FIGS. 2 and 5-18 is illustrated in FIGS. 19 and 20, one or more of the elements, processes, and/or devices illustrated in FIGS. 19 and/or 20 may be combined, divided, re-arranged, omitted, eliminated, and/or implemented in any other way. Further, the boundary conditions 1902 (FIGS. 19-20), the first embedded model(s) 1904 (FIGS. 19-20), the valve feedback 1906 (FIG. 19), the second embedded model(s) 1908 (FIGS. 19-20), the engine demand 1910 (FIGS. 19-20), the predictive model 1912 (FIGS. 19-20), the third embedded model(s) 1914 (FIGS. 19-20), the closed loop controller 1916 (FIGS. 19-20), the valve demands 1918 (FIG. 19), the valve demands 2002 (FIG. 20), the valve feedback 2004 (FIG. 20), and/or, more generally, the example fuel temperature control circuitry 240 of FIGS. 2 and 5-18, may be implemented by hardware alone or by hardware in combination with software and/or firmware. Thus, for example, any of the boundary conditions 1902 (FIGS. 19-20), the first embedded model(s) 1904 (FIGS. 19-20), the valve feedback 1906 (FIG. 19), the second embedded model(s) 1908 (FIGS. 19-20), the engine demand 1910 (FIGS. 19-20), the predictive model 1912 (FIGS. 19-20), the third embedded model(s) 1914 (FIGS. 19-20), the closed loop controller 1916 (FIGS. 19-20), the valve demands 1918 (FIG. 19), the valve demands 2002 (FIG. 20), the valve feedback 2004 (FIG. 20), and/or, more generally, the example fuel temperature control circuitry 240, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example [fuel temperature control circuitry 240 of FIGS. 2 and 5-18 may include one or more elements, processes, and/or devices in addition to, or instead of, those illustrated in FIGS. 19-20, and/or may include more than one of any or all of the illustrated elements, processes and devices.

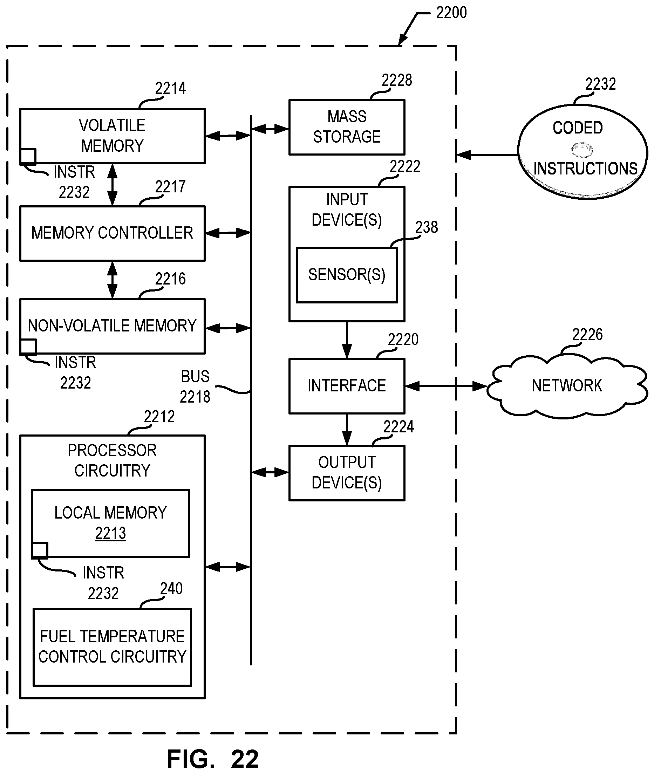

A Flowchart representative of example machine readable instructions, which may be executed by programmable circuitry to implement and/or instantiate the fuel temperature control circuitry 240 of FIGS. 2 and 5-18 and/or representative of example operations which may be performed by programmable circuitry to implement and/or instantiate the fuel temperature control circuitry 240 of FIGS. 2 and 5-18, is shown in FIG. 21. The machine readable instructions may be one or more executable programs or portion(s) of one or more executable programs for execution by programmable circuitry such as the programmable circuitry 2212 shown in the example programmable circuitry (e.g., processor) platform 2200 discussed below in connection with FIG. 22 and/or may be one or more function(s) or portion(s) of functions to be performed by the example programmable circuitry (e.g., an FPGA). In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart illustrated in FIG. 21, many other methods of implementing the example fuel temperature control circuitry 240 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 21 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 21 is a flowchart representative of example machine readable instructions and/or example operations 2100 that may be executed, instantiated, and/or performed by programmable circuitry to control a temperature of fuel for combustion. The example machine-readable instructions and/or the example operations 2100 of FIG. 21 begin at block 2102, at which the fuel temperature control circuitry 240 (FIGS. 2 and 5-18) identifies a target temperature associated with a target engine output. For example, the fuel temperature control circuitry 240 can determine the target temperature based on the engine demand 1910 (FIGS. 19-20). In some examples, the target temperature is a target fuel temperature. In some examples, the target temperature is a target heat exchange fluid temperature that is associated with the target fuel temperature.

At block 2104, the fuel temperature control circuitry 240 determines whether a measured temperature is greater than the target temperature. For example, the fuel temperature control circuitry 240 can determine whether a temperature measured by the sensor(s) 238 is greater than the target temperature. In some examples, the fuel temperature control circuitry 240 identifies a reduction in the engine demand 1910 (e.g., a chop scenario) and determines that the current temperature is greater than the target temperature. When the measured temperature is greater than the target temperature, the operations 2100 proceed to block 2106. Otherwise, when the measured temperature is not greater than the target temperature, the operations 2100 proceed to block 2108.

At block 2106, the fuel temperature control circuitry 240 causes a temperature of the fuel to decrease. For example, the fuel temperature control circuitry 240 can adjust one or more valve positions to alter a flow of the fuel and/or heat exchange fluid to one or more heat exchangers to reduce the temperature of the fuel, as discussed in association with FIGS. 2 and 5-18. After block 2106, the operations 2100 skip to block 2112.

At block 2108, the fuel temperature control circuitry 240 determines whether the measured temperature is less than the target temperature. For example, the fuel temperature control circuitry 240 can determine whether the temperature measured by the sensor(s) 238 is less than the target temperature. In some examples, the fuel temperature control circuitry 240 identifies an increase in the engine demand 1910 (e.g., a burst scenario) and determines that the current temperature is less than the target temperature. When the measured temperature is less than the target temperature, the operations 2100 proceed to block 2110. Otherwise, when the measured temperature is not less than the target temperature, the operations 2100 proceed to block 2112.

At block 2110, the fuel temperature control circuitry 240 causes a temperature of the fuel to increase. For example, the fuel temperature control circuitry 240 can adjust one or more valve positions to alter a flow of the fuel and/or heat exchange fluid to one or more heat exchangers to increase the temperature of the fuel, as discussed in association with FIGS. 2 and 5-18.

At block 2112, the fuel temperature control circuitry 240 determines whether to continue monitoring the fuel temperature. For example, the fuel temperature control circuitry 240 can determine that the fuel temperature is to be monitored so long as the gas turbine engine 100 is operating. When the monitoring is to continue, the operations 2100 return to block 2102. Otherwise, when the monitoring is complete, the operations 2100 terminate.

FIG. 22 is a block diagram of an example programmable circuitry platform 2200 structured to execute and/or instantiate the example machine-readable instructions and/or the example operations of FIGS. [Flowcharts] to implement the fuel temperature control circuitry 240 of FIG. [ER-Diagram]. The programmable circuitry platform 2200 can be, for example, a digital computer, a Full Authority Digital Engine Control (FADEC), or any other type of computing and/or electronic device.

The programmable circuitry platform 2200 of the illustrated example includes programmable circuitry 2212. The programmable circuitry 2212 of the illustrated example is hardware. For example, the programmable circuitry 2212 can be implemented by one or more integrated circuits, logic circuits, FPGAs, microprocessors, CPUs, GPUs, DSPs, and/or microcontrollers from any desired family or manufacturer. The programmable circuitry 2212 may be implemented by one or more semiconductor based (e.g., silicon based) devices. In this example, the programmable circuitry 2212 implements the fuel temperature control circuitry 240.

The programmable circuitry 2212 of the illustrated example includes a local memory 2213 (e.g., a cache, registers, etc.). The programmable circuitry 2212 of the illustrated example is in communication with main memory 2214, 2216, which includes a volatile memory 2214 and a non-volatile memory 2216, by a bus 2218. The volatile memory 2214 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 2216 may be implemented by flash memory and/or any other desired type of memory device. Access to the main memory 2214, 2216 of the illustrated example is controlled by a memory controller 2217. In some examples, the memory controller 2217 may be implemented by one or more integrated circuits, logic circuits, microcontrollers from any desired family or manufacturer, or any other type of circuitry to manage the flow of data going to and from the main memory 2214, 2216.

The programmable circuitry platform 2200 of the illustrated example also includes interface circuitry 2220. The interface circuitry 2220 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 2222 are connected to the interface circuitry 2220. The input device(s) 2222 permit(s) a user (e.g., a human user, a machine user, etc.) to enter data and/or commands into the programmable circuitry 2212. The input device(s) 2222 can be implemented by, for example, an engine demand signal, one or more sensors associated with the gas turbine engine 100 and/or the fuel thermal control systems 200, 500, 600, 700, 800, 900, 1000, 1100, 1200, 1300, 1400, 1500, 1600, 1700, 1800 (e.g., a pressure sensor, a temperature sensor, a flow rate sensor, a position sensor, etc.), and/or an actuator. In this example, the input device(s) 2222 implement the sensor(s) 238.

One or more output devices 2224 are also connected to the interface circuitry 2220 of the illustrated example. The output device(s) 2224 can be implemented, for example, by actuators associated with the valves of the fuel thermal control systems 200, 500, 600, 700, 800, 900, 1000, 1100, 1200, 1300, 1400, 1500, 1600, 1700, 1800. The interface circuitry 2220 of the illustrated example, thus, typically includes a graphics driver card, a graphics driver chip, and/or graphics processor circuitry such as a GPU.

The interface circuitry 2220 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 2226. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 2200 of the illustrated example also includes one or more mass storage discs or devices 2228 to store firmware, software, and/or data. Examples of such mass storage discs or devices 2228 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 2232, which may be implemented by the machine readable instructions of FIG. 21, may be stored in the mass storage device 2228, in the volatile memory 2214, in the non-volatile memory 2216, and/or on at least one non-transitory computer readable storage medium such as a CD or DVD which may be removable.

From the foregoing, it will be appreciated that example systems, apparatus, articles of manufacture, and methods have been disclosed that enable granular adjustments to a fuel temperature at a fast rate. As such, examples disclosed herein enable fuel temperature adjustments, which are desired as engine operations transition to and from transient conditions, to occur at a faster rate. Further, examples disclosed herein help prevent the fuel and/or engine components from overheating. Additionally, examples disclosed herein enable a smaller waste heat recovery heat exchanger to be utilized, which increases an efficiency of the engine and provides more flexibility in the mounting and/or integration of the waste heat recovery heat exchanger.

Example fuel thermal management systems and related methods are disclosed. Further aspects are provided by the subject matter of the following clauses:

A system comprising a flowline, a fuel tank coupled to a first end of the flowline, a combustor coupled to a second end of the flowline, the flowline to carry fuel from the fuel tank to the combustor, a trim heat exchanger coupled to a first portion of the flowline, the fuel to absorb first heat in the trim heat exchanger as the fuel flows through the first portion of the flowline, a valve coupled to the flowline to control a flow rate of the fuel in the first portion of the flowline, and a waste heat recovery heat exchanger coupled to a second portion of the flowline, the fuel to absorb second heat in the waste heat recovery heat exchanger, wherein a portion of at least one of the first heat or the second heat is absorbable from the fuel after the fuel exits the waste heat recovery heat exchanger.

The system of any preceding clause, wherein the first portion of the flowline is positioned upstream of the second portion.

The system of any preceding clause, wherein the trim heat exchanger is a first trim heat exchanger, further including a second trim heat exchanger coupled to a third portion of the flowline, wherein the second trim heat exchanger causes the portion of at least one of the first heat or the second heat to be absorbed from the fuel.

The system of any preceding clause, wherein the third portion of the flowline is a branch section that carries the fuel (i) from the waste heat recovery heat exchanger to the second trim heat exchanger and (ii) from the second trim heat exchanger to the waste heat recovery heat exchanger.

The system of any preceding clause, wherein the valve is a first valve and the flow rate is a first flow rate, further including a second valve coupled to the flowline or the waste heat recovery heat exchanger, wherein a position of the second valve controls a flow rate of the fuel in the third portion of the flowline.

The system of any preceding clause, wherein the first valve blocks the fuel from flowing through the first portion of the flowline to prevent the first trim heat exchanger from causing the fuel to absorb the first heat when the second valve causes the fuel to flow through the third portion of the flowline in which the second trim heat exchanger causes the portion of the second heat to be absorbed from the fuel.

The system of any preceding clause, further including a bypass valve coupled to the flowline upstream of the second portion of the flowline to enable a first portion of the fuel to bypass the waste heat recovery heat exchanger and mix with a second portion of the fuel that passed through the waste heat recovery heat exchanger downstream of the waste heat recovery heat exchanger, and wherein the first portion of the fuel is to absorb the portion of the second heat from the second portion of the fuel.

The system of any preceding clause, wherein, when the fuel bypasses the waste heat recovery heat exchanger, the valve blocks the fuel from flowing through the first portion of the flowline and absorbing the first heat in the trim heat exchanger.

A system comprising a flowline, a fuel tank coupled to a first end of the flowline, a combustor coupled to a second end of the flowline, the flowline to carry fuel from the fuel tank to the combustor, a first trim heat exchanger coupled to a first portion of the flowline, the fuel to absorb first heat in the first trim heat exchanger, a valve coupled to the flowline to control a flow rate of the fuel that enters the first portion of the flowline, a waste heat recovery heat exchanger coupled to a second portion of the flowline, the fuel to absorb second heat in the waste heat recovery heat exchanger, (i) a second trim heat exchanger coupled to a third portion of the flowline downstream of the waste heat recovery heat exchanger or (ii) a bypass valve coupled to a fourth portion of the flowline upstream of the waste heat recovery heat exchanger to control a flow rate of the fuel that bypasses the waste heat recovery heat exchanger, the second trim heat exchanger or the bypass valve to cause a portion of the second heat to be absorbed from the fuel, wherein the valve blocks the fuel from entering the first portion of the flowline when the second trim heat exchanger or the bypass valve causes the portion of the second heat to be absorbed from the fuel.

The system of any preceding clause, wherein the first trim heat exchanger is positioned upstream of the waste heat recovery heat exchanger.

The system of any preceding clause, wherein the system includes the second trim heat exchanger and not the bypass valve, and wherein the flowline includes a branch section that carries the fuel (i) from the waste heat recovery heat exchanger to the second trim heat exchanger and (ii) from the second trim heat exchanger to the waste heat recovery heat exchanger.

The system of any preceding clause, further including: a first valve coupled to the flowline, wherein a position of the first valve controls a first flow of the fuel to the first trim heat exchanger, and a second valve coupled to the flowline, wherein a position of the second valve controls a second flow of the fuel to the second trim heat exchanger.

The system of any preceding clause, further including fuel temperature control circuitry to: cause the first valve to block the first flow of the fuel to the first trim heat exchanger when the position of the second valve enables the second flow of the fuel to the second trim heat exchanger, and cause the second valve to block the second flow of the fuel to the second trim heat exchanger when the position of the first valve enables the first flow of the fuel to the first trim heat exchanger.

The system of any preceding clause, wherein the system includes the bypass valve and not the second trim heat exchanger.

The system of any preceding clause, further including fuel temperature control circuitry to cause the bypass valve to prevent the portion of the fuel from bypassing the waste heat recovery heat exchanger when a position of the valve enables the fuel to flow to the first trim heat exchanger.

A system comprising a flowline, a fuel tank coupled to a first end of the flowline, a combustor coupled to a second end of the flowline, the flowline to carry fuel from the fuel tank to the combustor, a first trim heat exchanger coupled to the flowline, the fuel to absorb first heat in the first trim heat exchanger, a first valve coupled to the flowline, wherein a position of the first valve controls whether the fuel absorbs the first heat in the first trim heat exchanger, a waste heat recovery heat exchanger coupled to the flowline, the fuel to absorb second heat in the waste heat recovery heat exchanger, and a second valve coupled to the flowline, wherein a position of the second valve controls whether a portion of the second heat is absorbed from the fuel.

The system of any preceding clause, wherein the second valve is coupled to a branch section of the flowline that enables a portion of the fuel to bypass the waste heat recovery heat exchanger.

The system of any preceding clause, wherein the portion of the fuel is a first portion, further including a mixer to mix the first portion of the fuel with a second portion of the fuel that passed through the waste heat recovery heat exchanger.

The system of any preceding clause, further including a second trim heat exchanger coupled to the flowline, wherein the portion of the second heat is absorbed from the fuel in the second trim heat exchanger.

The system of any preceding clause, wherein the second valve is coupled to a branch section of the flowline that enables the fuel to flow (i) from the waste heat recovery heat exchanger to the second trim heat exchanger and (ii) from the second trim heat exchanger to the waste heat recovery heat exchanger.

The system of any preceding clause, wherein the fuel does not absorb the first heat in the first trim heat exchanger when the second trim heat exchanger or the bypass valve causes the portion of the second heat to be absorbed from the fuel.

A system comprising a flowline, a fuel tank coupled to a first end of the flowline, a combustor coupled to a second end of the flowline, the flowline to carry fuel from the fuel tank to the combustor, a first trim heat exchanger coupled to a first portion of the flowline, the fuel to absorb first heat in the first trim heat exchanger, a waste heat recovery heat exchanger coupled to a second portion of the flowline, the fuel to absorb second heat in the waste heat recovery heat exchanger, and a bypass valve coupled to a third portion of the flowline upstream of the waste heat recovery heat exchanger to control a flow rate of the fuel that bypasses the waste heat recovery heat exchanger, the bypass valve to cause a portion of the second heat to be absorbed from the fuel.

A system comprising a flowline, a fuel tank coupled to a first end of the flowline, a combustor coupled to a second end of the flowline, the flowline to carry fuel from the fuel tank to the combustor, a first trim heat exchanger coupled to a first portion of the flowline, the fuel to absorb first heat in the first trim heat exchanger, a waste heat recovery heat exchanger coupled to a second portion of the flowline, the fuel to absorb second heat in the waste heat recovery heat exchanger, and a second trim heat exchanger coupled to the flowline, wherein the flowline includes a branch section that carries the fuel (i) from the waste heat recovery heat exchanger to the second trim heat exchanger and (ii) from the second trim heat exchanger to the waste heat recovery heat exchanger.

A fuel thermal control system comprising a flowline to carry a fluid, a waste heat recovery heat exchanger coupled to the flowline, the waste heat recovery heat exchanger to heat the fluid to a first temperature, and a feed tank coupled to the flowline, the feed tank including a first inlet and a second inlet, the first inlet to receive a first portion of the fluid from the waste heat recovery heat exchanger at the first temperature, the second inlet to receive a second portion of the fluid at a second temperature less than the first temperature, wherein the first portion of the fluid and the second portion of the fluid mix in the feed tank to form a third portion having a third temperature between the first temperature and the second temperature.

The fuel thermal control system of any preceding clause, wherein the fluid is fuel, further including: a fuel tank coupled to a first end of the flowline, and a combustor coupled to a second end of the flowline opposite the first end, the waste heat recovery heat exchanger and the feed tank positioned downstream of the first end and upstream of the second end.

The fuel thermal control system of any preceding clause, wherein the flowline defines a closed-loop flow path for the fluid.

The fuel thermal control system of any preceding clause, wherein the flowline is coupled to a fuel heater in which the fluid transfers heat to a fuel to be injected into a combustor.

The fuel thermal control system of any preceding clause, wherein the flowline includes a main loop and a fuel heater bypass section, wherein the main loop carries the fluid to the fuel heater, and wherein the fuel heater bypass section causes the fluid to bypass the fuel heater.

The fuel thermal control system of any preceding clause, further including fuel temperature control circuitry to increase a ratio of the first portion of the fluid to the second portion of the fluid when a fuel temperature is less than a target temperature.

The fuel thermal control system of any preceding clause, further including a valve positioned upstream of the second inlet, and wherein the fuel temperature control circuitry adjusts a position of the valve to increase the ratio.

The fuel thermal control system of any preceding clause, further including fuel temperature control circuitry to reduce a ratio of the first portion of the fluid to the second portion of the fluid when a fuel temperature is greater than a target temperature.

The fuel thermal control system of any preceding clause, wherein the flowline includes a first section and a second section, wherein the first section carries the fluid to the waste heat recovery heat exchanger and to the first inlet after the waste heat recovery heat exchanger, and wherein the second section includes a first end and a second end, wherein the first end is coupled to a portion of the first section upstream of the waste heat recovery heat exchanger, and wherein the second end is coupled to a recuperator.

The fuel thermal control system of any preceding clause, wherein the flowline includes a third section that couples the recuperator to the second inlet of the feed tank.

The fuel thermal control system of any preceding clause, wherein the flowline includes a fourth section that couples the recuperator to the first section of the flowline upstream of the waste heat recovery heat exchanger.

The fuel thermal control system of any preceding clause, wherein the flowline includes a fifth section that carries the fluid from the feed tank to the recuperator.

A fuel thermal control system comprising a flowline, a fuel storage tank coupled to a first end of the flowline, a combustor coupled to a second end of the flowline, the flowline to carry fuel from the fuel storage tank to the combustor, a waste heat recovery heat exchanger coupled to the flowline, and a feed tank coupled to the flowline downstream of the waste heat recovery heat exchanger.

The fuel thermal control system of any preceding clause, further including a fuel recuperator including an inlet to receive the fuel from the feed tank.

The fuel thermal control system of any preceding clause, wherein the inlet is a first inlet, and wherein the recuperator includes a second inlet to receive the fuel from a portion of the flowline upstream of the waste heat recovery heat exchanger.

The fuel thermal control system of any preceding clause, wherein the fuel recuperator includes an outlet that provides the fuel to a portion of the flowline upstream of the waste heat recover heat exchanger.

The fuel thermal control system of any preceding clause, wherein the recuperator includes an outlet that provides the fuel to the feed tank.

The fuel thermal control system of any preceding clause, wherein the fuel recuperator includes an outlet that provides the fuel to the combustor.

The fuel thermal control system of any preceding clause, wherein the feed tank includes a first inlet and a second inlet, the first inlet to receive the fuel from the waste heat recovery heat exchanger, the second inlet to receive the fuel from a portion of the flowline upstream of the waste heat recovery heat exchanger.

The fuel thermal control system of any preceding clause, wherein the feed tank includes an outlet that provides the fuel to the combustor.

A fuel thermal control system comprising a flowline, a fuel heat exchanger coupled to the flowline, the fuel heat exchanger to cause a fluid to transfer heat to a fuel, and a feed tank coupled to the flowline, the feed tank including a first inlet, a second inlet, and an outlet, the first inlet to receive the fluid at a first temperature, the second inlet to receive the fluid at a second temperature less than the first temperature, the feed tank to mix the fluid at the first temperature and the fluid at the temperature to cause the fluid to obtain a third temperature between the first temperature and the second temperature, the fluid at the third temperature to flow through the outlet to the fuel heat exchanger.

The fuel thermal control system of any preceding clause, further including a waste heat recovery heat exchanger coupled to the flowline, the waste heat recovery heat exchanger to cause the fluid to absorb heat to obtain the first temperature.

The fuel thermal control system of any preceding clause, wherein a portion of the flowline bypasses the waste heat recovery heat exchanger to deliver the fluid at the second temperature to the second inlet of the feed tank.

A fuel thermal control system comprising a flowline, a fuel heat exchanger coupled to the flowline, the fuel heat exchanger to cause a fluid to transfer heat to a fuel, a waste heat recovery heat exchanger coupled to the flowline, a recuperator coupled to the flowline, the recuperator including a first inlet, a second inlet, and an outlet, the first inlet to receive the fluid at a first temperature, the second inlet to receive the fluid at a second temperature less than the first temperature, the fluid to flow through the outlet to the fuel heat exchanger at a third temperature between the first temperature and the second temperature,

The fuel thermal control system of any preceding clause, wherein the outlet is a first outlet, and wherein the recuperator includes a second outlet to deliver the fluid at the third temperature to a portion of the flowline upstream of the waste heat recovery heat exchanger.

A fuel thermal control system comprising means for transporting a heat exchange fluid, means for causing heat to be transferred from the heat exchange fluid to a fuel, means for causing heat to be transferred from exhaust fluid to the heat exchange fluid to cause the heat exchange fluid to obtain a first temperature, and means for mixing the heat exchange fluid at the first temperature with the heat exchange fluid at a second temperature less than the first temperature to cause the heat exchange fluid to obtain a third temperature, wherein the means for transporting transports the heat exchange fluid at the third temperature to the means for causing heat to be transferred from the heat exchange fluid to the fuel.

A fuel thermal control system comprising means for transporting a fluid, means for causing heat to be transferred to the fluid, first means for selectively bypassing the means for causing heat to be transferred to the fluid, means for mixing a first portion of the fluid from the means for causing and a second portion of the fluid from the first means for selectively bypassing, means for causing heat to be transferred from the fluid, and second means for selectively bypassing the means for causing heat to be transferred from the fluid.

The fuel thermal control system of any preceding clause, further including a valve to control a ratio of the fuel that flows to the fuel heater compared to the fuel heater bypass section.

The fuel thermal control system of any preceding clause, further including fuel temperature control circuitry to control a ratio of the first portion of the fluid to the second portion of the fluid to adjust the third temperature based on a temperature measurement from one or more sensors operatively coupled to the flowline between the feed tank and the fuel heater.

The fuel thermal control system of any preceding clause, wherein the flowline is a heat exchange fluid flowline, further including fuel temperature control circuitry to control a ratio of the first portion of the fluid to the second portion of the fluid to adjust the third temperature based on a temperature measurement from one or more sensors operatively coupled to a fuel flowline between the fuel heater and the combustor.

The fuel thermal control system of any preceding clause, wherein the flowline includes a main loop and a fuel heater bypass section, wherein the main loop carries the fluid to the fuel heater, and wherein the fuel heater bypass section causes the fluid to bypass the fuel heater.

The fuel thermal control system of any preceding clause, further including a valve to control a ratio of the fluid that flows to the fuel heater versus bypassing the fuel heater in fuel heater bypass section.

The fuel thermal control system of any preceding clause, further including a mixer coupled to the main loop and the fuel heater bypass section to mix the fluid that flows through the fuel heater with the fluid that bypasses the fuel heater.

The fuel thermal control system of any preceding clause, wherein the flowline is a heat exchange fluid flowline, further including fuel temperature control circuitry to control a ratio of the fluid at the first temperature to the fluid at the second temperature that mix in the feed tank based on a temperature measurement from one or more sensors operatively coupled to a fuel flowline between the fuel heater and a combustor.

The fuel thermal control system of any preceding clause, further including fuel temperature control circuitry to control a ratio of the fluid at the first temperature to the fluid at the second temperature that mix in the feed tank based on a temperature measurement from one or more sensors operatively coupled to the flowline between the feed tank and the fuel heater.

The system of any preceding clause, wherein the second valve is coupled to a branch section of the flowline that enables the fuel to flow (i) from the waste heat recovery heat exchanger to the second trim heat exchanger and (ii) from the second trim heat exchanger to the waste heat recovery heat exchanger or proximate an outlet of the waste heat recovery heat exchanger.

The system of any preceding clause, further including a mixer to mix the fuel from the first portion of the flowline with the fuel in the second portion of the flowline upstream of the waste heat recovery heat exchanger.

The system of any preceding clause, wherein the trim heat exchanger includes an electrical heat exchanger.

The system of any preceding clause, wherein the trim heat exchanger includes a prop gearbox surface cooler, an indirect drive gearbox surface cooler, a compressor frame surface cooler, a turbine frame surface cooler, a high-pressure compressor case surface, a combustor case, or a turbine case surface.

The fuel thermal control system of any preceding clause, wherein the feed tank includes at least one of a turbulator, a screen, or a swirler to facilitate mixing the first portion and the second portion of the fluid.

The fuel thermal control system of any preceding clause, wherein the feed tank includes a pump to facilitate mixing the first portion and the second portion of the fluid.

The fuel thermal control system of any preceding clause, further including fuel temperature control circuitry to control the valve based on a temperature measurement from one or more sensors operatively coupled to the flowline between the feed tank and the fuel heater.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A system (200, 500, 600) comprising:
a flowline (204, 502, 602);
a fuel tank (202) coupled to a first end of the flowline;
a combustor (118) coupled to a second end of the flowline, the flowline to carry fuel from the fuel tank to the combustor;
a trim heat exchanger (212) coupled to a first portion (207) of the flowline, the fuel to absorb first heat in the trim heat exchanger as the fuel flows through the first portion of the flowline;
a valve (222) coupled to the flowline to control a flow rate of the fuel in the first portion of the flowline; and
a waste heat recovery heat exchanger (210) coupled to a second portion (205) of the flowline, the fuel to absorb second heat in the waste heat recovery heat exchanger, wherein a portion of at least one of the first heat or the second heat is absorbable from the fuel after the fuel exits the waste heat recovery heat exchanger.

2. The system of claim 1, wherein the first portion of the flowline is positioned upstream of the second portion.

3. The system of claim 1 or 2, wherein the trim heat exchanger is a first trim heat exchanger, further including a second trim heat exchanger (214) coupled to a third portion (209, 504) of the flowline, wherein the second trim heat exchanger causes the portion of at least one of the first heat or the second heat to be absorbed from the fuel.

4. The system of claim 3, wherein the third portion of the flowline is a branch section (504) that carries the fuel (i) from the waste heat recovery heat exchanger to the second trim heat exchanger and (ii) from the second trim heat exchanger to the waste heat recovery heat exchanger.

5. The system of claim 3 or 4, wherein the valve is a first valve and the flow rate is a first flow rate, further including a second valve (224) coupled to the flowline or the waste heat recovery heat exchanger, wherein a position of the second valve controls a flow rate of the fuel in the third portion of the flowline.

6. The system of claim 5, wherein the first valve blocks the fuel from flowing through the first portion of the flowline to prevent the first trim heat exchanger from causing the fuel to absorb the first heat when the second valve causes the fuel to flow through the third portion of the flowline in which the second trim heat exchanger causes the portion of the second heat to be absorbed from the fuel.

7. The system of any preceding claim, further including a bypass valve (224) coupled to the flowline upstream of the second portion of the flowline to enable a first portion of the fuel to bypass the waste heat recovery heat exchanger and mix with a second portion of the fuel that passed through the waste heat recovery heat exchanger downstream of the waste heat recovery heat exchanger, and wherein the first portion of the fuel is to absorb the portion of the second heat from the second portion of the fuel.

8. The system of claim 7, wherein, when the fuel bypasses the waste heat recovery heat exchanger, the valve blocks the fuel from flowing through the first portion of the flowline and absorbing the first heat in the trim heat exchanger.

9. The system of claims 5 to 8, further including fuel temperature control circuitry to:
cause the first valve to block the first flow of the fuel to the first trim heat exchanger when the position of the second valve enables the second flow of the fuel to the second trim heat exchanger; and
cause the second valve to block the second flow of the fuel to the second trim heat exchanger when the position of the first valve enables the first flow of the fuel to the first trim heat exchanger.

10. The system of claim 7 or any claim dependent thereon, further including fuel temperature control circuitry to cause the bypass valve to prevent the portion of the fuel from bypassing the waste heat recovery heat exchanger when a position of the valve enables the fuel to flow to the first trim heat exchanger.

11. The system of claim 7 or any claim dependent thereon, further including a mixer (228) to mix the first portion of the fuel with the second portion of the fuel that passed through the waste heat recovery heat exchanger.

12. The system of claims 5 to 11, wherein the second valve is coupled to a branch section of the flowline that enables the fuel to flow (i) from the waste heat recovery heat exchanger to the second trim heat exchanger and (ii) from the second trim heat exchanger to the waste heat recovery heat exchanger or proximate an outlet of the waste heat recovery heat exchanger.

13. The system of any preceding claim, further including a mixer (226) to mix the fuel from the first portion of the flowline with the fuel in the second portion of the flowline upstream of the waste heat recovery heat exchanger.

14. The system of any preceding claim, wherein the trim heat exchanger includes an electrical heat exchanger.

15. The system of any preceding claim, wherein the trim heat exchanger includes a prop gearbox surface cooler (418), an indirect drive gearbox surface cooler (332), a compressor frame surface cooler (326), a turbine frame surface cooler (328), a high-pressure compressor case surface (322), a combustor case (334), or a turbine case surface (324).
